# EUROPEAN PATENT APPLICATION

(11) **EP 4 597 251 A1**
(43) Date of publication of application: **06.08.2025**
(21) Application number: 25155538.9
(22) Date of filing: 03.02.2025
(51) Int. Cl.: G05D 1/244, G05D 1/698, G05D 1/693

(54) **TRAVEL PATH ACCESS CONTROL FOR MATERIALS HANDLING VEHICLE**

(30) Priority: 02.02.2024 US 202463549217 P
(71) Applicant: Crown Equipment Corporation, New Bremen, OH 45869 (US)
(72) Inventor: SCHLOEMER, James, New Bremen (US); WALTZ, Lucas B., Coldwater (US)
(74) Representative: WBH Wachenhausen Patentanwälte PartG mbB

(57) **Abstract**

An electronic message indicates that a materials handling vehicle is approaching an access-controlled travel path. The materials handling vehicle has a travel system that includes a normal travel mode, a limp travel mode, and a restricted travel mode. An electronic permission request is generated to enter the access-controlled travel path. Additionally, an electronic command is issued to set the travel system to the limp travel mode as the materials handling vehicle engages an entry threshold of the access-controlled travel path. A transceiver receives an electronic permission response that includes a determination of whether the access-controlled travel path is in an open state or a closed state. An electronic command then sets the travel system to the restricted travel mode when the access-controlled travel path is in the closed state, and the normal travel mode when the access-controlled travel path is in the open state.

## Description

### FIELD

Various aspects of the present disclosure relate generally to the use of technology features that affect the control and/or operation of materials handling vehicles, and more particularly to features that provide access control to travel paths of materials handling vehicles.

### BACKGROUND

Materials handling vehicles are commonly used for moving goods and picking stock in industrial environments, such as warehouses, distribution centers, and other commercial establishments. Such materials handling vehicles typically include a power unit and a load handling assembly, which may include load carrying forks. Many industrial environments are of sufficient size to have numerous materials handling vehicles actively working at the same time. This creates the possibility that multiple materials handling vehicles need or otherwise want to access to the same travel path.

### BRIEF SUMMARY

According to aspects of the present disclosure, a process is provided, which implements access control in an industrial environment. The process comprises receiving an electronic message that indicates that a materials handling vehicle is approaching an access-controlled travel path. In this implementation, the materials handling vehicle has a travel system that comprises a normal travel mode, a limp travel mode, and a restricted travel mode. The process also comprises generating an electronic permission request to enter the access-controlled travel path responsive to the received electronic message. Also, the process comprises issuing an electronic command to set the travel system of the materials handling vehicle to the limp travel mode as the materials handling vehicle engages an entry threshold of the access-controlled travel path. The process further comprises receiving, via a transceiver of the materials handling vehicle, an electronic permission response. Here, the electronic permission response is received responsive to the generated electronic permission request. The electronic permission response indicates whether the access-controlled travel path is in an open state or a closed state. Yet further, the process comprises issuing an electronic command to set the travel system of the materials handling vehicle to the restricted travel mode when the access-controlled travel path is in the closed state, and issuing an electronic command to set the travel system of the materials handling vehicle to the normal travel mode when the access-controlled travel path is in the open state.

In some embodiments of the process, receiving the electronic message further comprises receiving the electronic message responsive to receiving, by a processing device on the materials handling vehicle, location data. Location data may be received from at least one of a location sensor that is coupled to the materials handling vehicle, a location tracking system on the materials handling vehicle, or via a radio frequency identification transceiver reading a radio frequency identification tag associated with location data. Regardless, the location data indicates that the materials handling vehicle is approaching the access-controlled travel path.

In some embodiments, issuing the electronic command to set the travel system of the materials handling vehicle to the limp travel mode as the materials handling vehicle engages the entry threshold of the access-controlled travel path comprises restricting a forward travel distance of the materials handling vehicle into the access-controlled travel path (e.g., to a predetermined distance beyond the entry threshold), and limiting thereafter, a travel direction of the materials handling vehicle to a reverse travel direction that exits the access-controlled travel path. Optionally, a timer may be engaged that sets a limited amount of wait time that the materials handling vehicle can remain in the limp travel mode, to provide an opportunity for the access-controlled travel path to clear to the open state before issuing a command for the travel system to implement the restricted travel mode.

In certain embodiments, the process may further comprise performing, responsive to the generated electronic permission request, a verification that at least one other materials handling vehicle is within the access-controlled travel path before issuing the electronic command to set the travel system of the materials handling vehicle to the restricted travel mode.

Also, in certain embodiments, the process may further comprise performing, responsive to the generated electronic permission request, a verification. The verification may indicate that the access-controlled travel path is currently being used by a resource before issuing the electronic command to set the travel system of the materials handling vehicle to the restricted travel mode. The verification may also and/or alternatively indicate that the access-controlled travel path is currently designated as reserved by a resource before issuing the electronic command to set the travel system of the materials handling vehicle to the restricted travel mode.

Some embodiments of the process further comprise implementing a resource allocation scheme. The resource allocation scheme may set a location access time limit for materials handling vehicles to remain in the access-controlled travel path (whereupon a resource within the access-controlled travel path that exceeds its location access time limit is automatically required to exit the access-controlled travel path). Also, and/or alternatively, the resource allocation scheme may set a priority for materials handling vehicles to remain in the access-controlled travel path (whereupon a resource within the access-controlled travel path with a lower priority than an approaching resource with a higher priority is automatically required to exit the access-controlled travel path).

Some embodiments of the process further comprise implementing a partial segregation of a locked access-controlled travel path to grant access where a determination is made that allowing access of the materials handling vehicle to the access-controlled travel path, despite designation of the closed state, would not violate an access rule.

In some embodiments of the process, the access-controlled travel path comprises an aisle in an industrial environment. Here, generating the electronic permission request comprises transmitting, via a transceiver on the materials handling vehicle, the electronic permission request to access the aisle when the received location data indicates proximity to the entry threshold implemented as an aisle threshold of the aisle.

Some embodiments of the process further comprise utilizing a display on the materials handling vehicle as an interface. The interface may graphically display, for at least one access-controlled travel path, a view of the locked access-controlled travel path, a time the displayed access-controlled travel path has been locked, a prediction of how long the displayed access-controlled travel path will be locked, or a combination thereof.

Likewise, some embodiments of the process further comprise utilizing a display on the materials handling vehicle to form an intercom for communication with another materials handling vehicle within the access-controlled travel path that has the access-controlled travel path locked to the closed state. Additionally, some embodiments of the process comprise utilizing a display on the materials handling vehicle to enable an operator of the materials handling vehicle to define at least one parameter defining a lock placed on the access-controlled travel path, the at least one parameter defining a start time of desired restricted access, a duration of restricted access, a size of a restricted access area within the access-controlled travel path, or combinations thereof.

Some embodiments of the process further comprise automatically unlocking the access-controlled travel path and transitioning the access-controlled travel path to an open state by exiting the access-controlled travel path, transmitting an exit signal when the materials handling vehicle has occupied the access-controlled travel path and has traveled back over the entry threshold to exit the access-controlled travel path, or both.

Some embodiments of the process further comprise reporting a current coordinate location of the materials handling vehicle to a remote server while the materials handling vehicle remains in the access-controlled travel path.

Some embodiments of the process further comprise receiving operator logon information that identifies an operator of the materials handling vehicle and transmitting the operator logon information with the electronic permission request to access the aisle. Here, receiving the electronic permission response further comprises receiving an electronic permission response that is based on the operator logon information.

Some embodiments of the process further comprise receiving an override command from an operator of the materials handling vehicle to alter the state of the aisle and transmitting the override command.

Some embodiments of the process further comprise transmitting, upon entry of the materials handling vehicle into the aisle, an electronic command to toggle a visual indicator disposed proximally to the aisle threshold to a closed configuration, and transmitting, upon exit of the materials handling vehicle from the aisle, an electronic command to toggle a visual indicator disposed proximally to the aisle threshold to an open configuration.

Some embodiments of the process further comprise displaying, at a user interface, information related to a status of an aisle within an environment, wherein the status of the aisle comprises a select one of: an open state and a closed state, an indication of a reservation request where the aisle status is open, and an identification that the aisle has the closed status during a time associated with the reservation.

In some additional embodiments of the system, the processor, when executing the executable instructions, receives operator logon information that identifies an operator of a materials handling vehicle, wherein the operator logon information comprises a modifiable permission parameter, and transmits the operator logon information with the electronic permission request to access the aisle via the transceiver. In this regard, the electronic permission response is further based on the operator logon information.

In still some additional embodiments of the system, the processor, when executing the executable instructions, receives an override command from an operator of the materials handling vehicle to alter the state of the aisle, and transmits the override command via the transceiver.

In yet some additional embodiments, the processor, when executing the executable instructions transmits via the transceiver, upon entry of the materials handling vehicle into the aisle, an electronic command to toggle visual indicators that are disposed proximally to the aisle threshold to a closed configuration, transmits, upon exit of the materials handling vehicle from the aisle, an electronic command to toggle visual indicators that are disposed proximally to the aisle threshold to an open configuration.

### BRIEF DESCRIPTION OF THE SEVERAL VIEWS OF THE DRAWINGS

FIG. 1A is a schematic view of an operating environment for materials handling vehicles;
FIG. 1B is a schematic block diagram illustrating coordination between a materials handling vehicle, a permission controller, and an access-controlled travel path, according to aspects herein;
FIG. 2 is a schematic diagram of several components of a materials handling vehicle;
FIG. 3 is a flowchart illustrating an example process for implementing access control in an industrial environment, according to aspects herein;
FIG. 4 is a schematic example of implementing access control in an industrial environment, according to aspects herein;
FIG. 5 is a flowchart illustrating another example process for implementing access control in an industrial environment, according to aspects herein;
FIG. 6 is a schematic diagram of a system for implementing access control in an industrial environment, according to aspects herein;
FIG. 7 is a flowchart illustrating an example process for evaluating an electronic permission request for industrial vehicle location access control according to aspects herein;
FIG. 8 is a flowchart illustrating an aisle access control process according to aspects herein; and
FIG. 9 is a block diagram of a computer system having a computer readable storage medium for implementing functions according to various implementations as described in greater detail herein.

In the following detailed description of the illustrated implementations, reference is made to the accompanying drawings that form a part hereof, and in which is shown by way of illustration, and not by way of limitation, specific embodiments in which the disclosure may be practiced. It is to be understood that other embodiments may be utilized and that changes may be made without departing from the spirit and scope of various embodiments of the present disclosure.

### DETAILED DESCRIPTION

### Introduction

In industrial environments, materials handling vehicles are typically required to perform tasks that require navigation along travel paths throughout the course of a work shift. Here, travel paths can include for example, lanes, aisles, docks, yards, trailers, tracks, regions, areas, locations, etc. As such, times will inevitably exist where more than one materials handling vehicle will need to access the same travel path, e.g., enter the same aisle, lane, region, etc. This can lead to congestion and delays among other issues.

Moreover, such challenges are increased in industrial environments that include very narrow aisle (VNA) applications, e.g., where an aisle is only wide enough to accommodate one materials handling vehicle at a time (e.g., the aisle is not wide enough for two materials handling vehicles to pass each other). Some VNA applications use guide wires, RFID tags, or other assistive technology to direct a materials handling vehicle down a VNA. However, such technologies do not effectively address intelligent travel path locking and unlocking. Moreover, aspects disclosed herein are not limited to VNA applications, nor are aspects herein limited to wire guided, or other automated environments.

In many environments, there may be multiple materials handling vehicles operating in travel restricted areas. In this regard, it can be advantageous to prevent more than one materials handling vehicle simultaneously in one travel path, such as an aisle. Alternatively, it can be advantageous in certain applications to limit the number of materials handling vehicles along a given travel path (which may include a VNA) at the same time, to some defined number, which can be greater than one.

### Definitions

As used herein:
An "access-controlled travel path" is an area upon which a materials handling vehicle can travel (e.g., a lane, aisle, dock, yard, trailer, track, region, path, area, location, etc.), where a materials handling vehicle may be denied access to area, or the materials handling vehicle may be granted access to all or at least a portion of the area.

In practical applications, the access-controlled travel path can include a "buffer area" and a "controlled area". The buffer area, where provided, is located at an entrance and/or exit of the access-controlled travel path, and provides an area for a materials handling vehicle to wait for permission or denial of access. If denial of access is provided, the buffer area affords an area for the denied materials handling vehicle to vacate the area without disturbing vehicle(s) in the controlled area. The controlled area of the access-controlled travel path represents the area where access control is to be regulated.

A "travel system" is a capability of a materials handling vehicle to operate in one or more operating modes, where each operating mode affects: at least one travel related performance parameter (e.g., in a traction controller, steer controller, etc.), at least one power related performance parameter (e.g., in a hydraulics controller), or a combination thereof, e.g., so as to control a top speed, a travel direction, a maximum lift height, a maximum carry load, etc. In some implementations, one or more performance parameters can be different for a given mode, based upon a determined factor, such as time of day, shift, environmental conditions, travel direction, operator, vehicle type, etc.

A "normal travel mode" is a default mode, where the travel system imposes no constraints (or the least restrictive constraints compared to other modes of the travel system), onto travel related performance parameter(s) and/or power related performance parameter(s) of the materials handling vehicle.

In some implementations, the normal travel mode is whatever state the materials handling vehicle is in just before approaching an access-controlled travel path 130. For instance, the materials handling vehicle may be operating at a full/maximum capacity. In other examples, the materials handling vehicle may be "performance tuned", e.g., due to an operator rating or skill level, due to an assigned task, due to a location, environmental constraints, etc. Here, even though the materials handling vehicle is "performance tuned" to less than maximum setpoints (e.g., for one or more of travel speed, acceleration, steering, blending, lift height, lift speed, lift weight, etc.), the materials handling vehicle is still operating "normally" and is thus in a normal travel mode.

Alternatively, some implementations of the "normal" travel mode adjust set points to control a maximum defined top speed, travel direction, lift height, lift speed, other parameter, combinations thereof, etc. For instance, in a given access-controlled travel path, a materials handling vehicle 108 may be limited to a top speed of 3 miles per hour (about 4.8 kilometers per hour) in the normal travel mode, whereas the same materials handling vehicle 108 may be able to travel 5 mph (about 8 kilometers per hour) outside the access-controlled travel path 130. The normal travel mode may also require that a light is turned on, that a periodic sound is initiated, that feedback is provided to designate the normal travel mode, or a combination thereof, etc.

A "limp travel mode" restricts, reduces, or otherwise limits at least one travel related performance parameter and/or at least one power related performance parameter of the materials handling vehicle compared to the normal travel mode. For instance, the limp travel mode may restrict relative to the normal travel mode, a travel direction (e.g., forks first or power unit first), a maximum travel speed, a maximum load lift height, a maximum load weight, or combinations thereof. This can be accomplished, for example, by the travel system implementing commands to change set points in a traction control module, hydraulic control module, steer direction control module, etc., of the materials handling vehicle. The limp travel mode can also trigger a communication device to inform the vehicle operator of the change, e.g., via a light, buzzer, display message, audible message, combination thereof, etc.

The limp travel mode may also prevent or limit forward travel of the materials handling vehicle (such as by restricting a forward travel distance of the materials handling vehicle into (or otherwise towards) the access-controlled travel path to a predetermined distance (e.g., 20 feet or just over 6 meters) e.g., corresponding to a "buffer area" of the access-restricted travel path).

Also, the limp travel mode may optionally allow travel functions that are directed to traveling away from or exiting a corresponding access-controlled travel path than are greater than traveling towards the entry threshold. The limp travel mode may also require that a light is turned on or otherwise changed, that a periodic sound is initiated, that a feedback is provided to designate the limp travel mode, combinations thereof, etc.

In some implementations, the limp travel mode can be used to place the materials handling vehicle into a holding pattern while a decision is made with regard to a request for access to a corresponding access-controlled travel path. For instance, in a given access-controlled travel path (e.g., a travel restricted lane or aisle), a materials handling vehicle in the limp travel mode may be automatically limited to a maximum speed of 1 mile per hour (about 1.6 kilometers per hour) heading into or towards the entry of the access-restricted travel path. Alternatively, the maximum travel speed may be greater if the materials handling vehicle 108 is traveling out of or away from the access-controlled travel path 130.

In other implementations, the above conditions are not strictly automated. Rather, the above represent instructions provided to the operator as not to exceed parameters.

A "restricted travel mode" modifies the normal travel mode and can modify the limp travel mode to add additional constraints or restrictions. In some implementations, the restricted travel mode may prevent or otherwise warn against operation of a materials handling vehicle traveling in a certain direction (e.g., travel into the access-controlled travel path).

The restricted travel mode may also automatically reverse direction of the materials handling vehicle, e.g., to vacate the area of the access-controlled travel path. The restricted travel mode may alternatively only allow travel functions that are directed to traveling away from a corresponding access-controlled travel path.

In some implementations, the restricted travel mode is conceptual and does not require actual vehicle modification, e.g., from the limp travel mode. Here, the restricted travel mode is a conceptual term to indicate a state where a request to enter an access-restricted travel path is denied (e.g., where the access-controlled travel path is in a closed state).

Yet further, the restricted travel mode can optionally implement messaging to the operator indicating that the access-controlled travel path is unavailable. As a few examples, the restricted travel mode may trigger a communication device to inform the vehicle operator of the restriction (e.g., via a light, buzzer, display message, audible message, combination thereof, etc.). Similarly, the restricted travel mode may also require that a light is turned on or otherwise changed, that a periodic sound is initiated, that a feedback is provided to designate the limp travel mode, combinations thereof, etc. In other implementations, the above conditions are not strictly automated. Rather, the above represent instructions provided to the operator as not to exceed parameters.

In some implementations, travel related parameters may be adjusted or modified, but control affecting a reverse direction may be unaffected so that a materials handling vehicle can exit an area where a request for access to a travel path was denied. In other examples, a backup speed may be affected. In some examples, one or more environmental factors may influence the restricted travel mode. For instance, travel speed may be set at a first, relatively low speed where other materials handling vehicles are in the vicinity, but the travel speed may be greater where there are no other materials handling vehicles in the vicinity, etc. In this regard, environment, pedestrians, other vehicles, extrinsic factors, etc., can optionally influence how the restricted travel mode is implemented.

A "travel related performance parameter" is a parameter that affects travel capabilities of a materials handling vehicle, such as by programming a set point in a traction controller to limit a top speed, limiting a travel direction (e.g., forks forward first or power unit forward first), etc.

A "power related performance parameter" is a parameter that affects power and load handling capabilities of a materials handling vehicle, such as by programming a set point in a hydraulic controller to limit a lift height, load carrying capacity, etc.

An "electronic permission request" is an exchange between electronic devices that designates a request to gain access to an access-controlled travel path.

An "electronic permission response" is an exchange between electronic devices to designate a response to an electronic permission request.

An "open state" is a designation indicated by the electronic permission response that facilitates access by a materials handling vehicle to the access-controlled travel path.

An "entry threshold" is an indicator of an entrance (or exit) to an access-controlled travel path, where the entry threshold can be electronically detected, electronically sensed, or otherwise electronically identified. In practical applications, the entry threshold can be located before or proximate a "buffer area" of the access-controlled travel path to allow a materials handling vehicle to wait for the electronic permission response and to be able to vacate from the buffer area if permission is denied.

A "closed state" is a designation indicated by the electronic permission response that denies access by a materials handling vehicle to the access-controlled travel path.

A "permission controller" is a controller that receives electronic permission requests, and transmits electronic permission responses either granting or denying access to an associated access-controlled travel path.

### System Overview

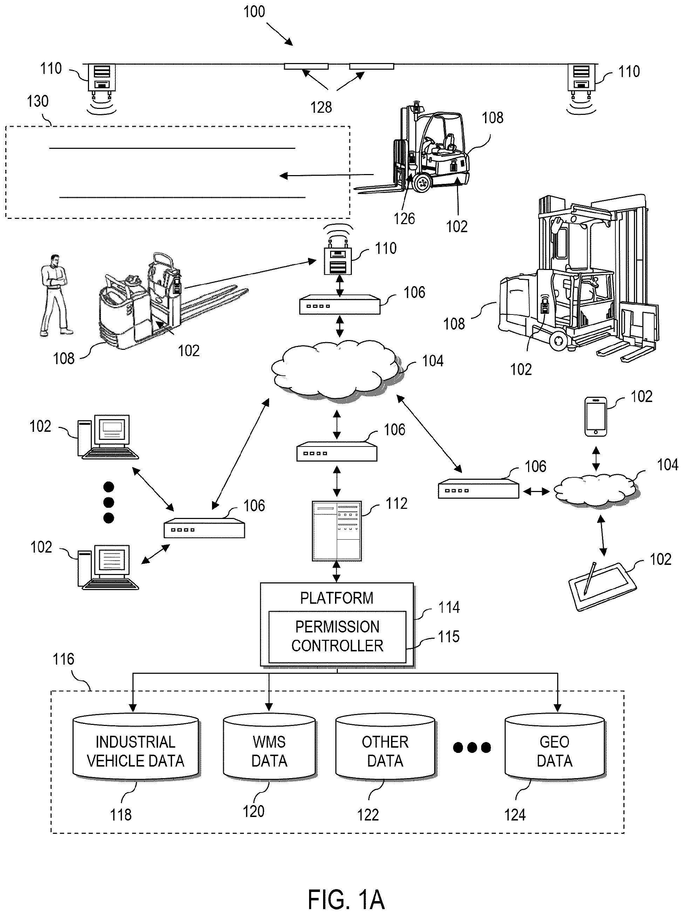

Referring now to the drawings and in particular to FIG. 1A, a schematic diagram illustrates an example industrial environment 100. The implementation of the industrial environment 100 is for illustrative purposes and is not meant to be literal or exhaustive, thus embodiments can include any combination of features herein.

The illustrated industrial environment 100 includes hardware-equipped processing devices 102 that are linked together by one or more network(s) 104.

Each network 104 provides communications links between the various processing devices 102 and may be supported by networking components 106 that interconnect the processing devices 102.

Networking components 106 include for example, routers, hubs, firewalls, network interfaces, wired or wireless communications links and corresponding interconnections, cellular stations and corresponding cellular conversion technologies.

One or more materials handling vehicles 108 include a processing device 102 (e.g., implemented as an information linking device) that wirelessly communicates (e.g., via Wi-Fi access points 110) to a corresponding networking component 106, which serves as a connection to the network(s) 104. Here, the processing device 102 functions as a controller for the materials handling vehicle.

The industrial environment 100 also includes a server 112 (e.g., a web server, file server, and/or other processing device) that supports a platform 114.

A control center (e.g., a permission controller 115) provides travel path access control, as will be described more fully herein. In example implementations, the permission controller 115 can be implemented on the platform 114. The permission controller 115 can alternatively be implemented outside the server 112 (e.g., in the processing device 102 of a materials handling vehicle 108, by a controller associated with an access-controlled travel path, etc.).

The platform 114 can also provide monitoring, management, control, or combinations thereof, of materials handling vehicles technology features thereof.

In the illustrative example, data sources 116, which need not be co-located, can include a materials handling vehicle information data source 118 that collects data from the operation of materials handling vehicles 108. By way of example, the materials handling vehicle information data source 118 can store electronic vehicle records received wirelessly, from materials handling vehicle(s) 108. In this regard, each electronic vehicle record can comprise travel-related data, operational data, maintenance data, observational data, configuration data, component state data, measured sensor data, impact data, or other information obtained, collected, or otherwise recorded by a processing device 102 on an associated materials handling vehicle 108. Each electronic vehicle record can also include an operator identification of the corresponding operator of the materials handling vehicle 108. Such electronic vehicle records can be utilized by the permission controller 115 to make determinations regarding requests for access to access-controlled travel paths.

Data sources 116 can also include a management system data source 120 (e.g., warehouse management system (WMS) data source), that stores data related to the movement and tracking of goods within the work environment in a WMS domain. As such, in some implementations, WMS data (alone or in combination with data from one or more other data sources, such as the materials handling vehicle information data source 118) can be utilized by the permission controller 115 to make determinations regarding requests for access to access-controlled travel paths.

Moreover, data sources 116 can include any other data source(s) 122 needed by the work environment, such as a labor management system (LMS), etc.

In some implementations, the system may also include a data source such as a geo-location system 124 that stores information pertaining to geo-features in an environment, geo-capabilities and/or restrictions imposed on a materials handling vehicle 108, location tracking of materials handling vehicles 108, etc. The geo-location data can be utilized by the permission controller 115 to make determinations regarding requests for access to access-controlled travel paths.

Still further, the materials handling vehicles 108 can be equipped with a localized communication device 126 that can function as a location sensor, as will be described in greater detail herein. The localized communication device 126 can be integral with, or in data communication with other features of the processing device 102 of the materials handling vehicle 108. As such, reference generally to the processing device 102 can include the localized communication device 126.

Anchors 128 may be utilized as entry tag(s) that identify a location such as an access-controlled travel path 130, for travel path access control, as will be described in greater detail herein.

Moreover, as schematically illustrated, certain materials handling vehicles 108 may be required to enter the access-controlled travel path 130. The access-controlled travel path 130 is described in greater detail throughout.

### Introductory Example

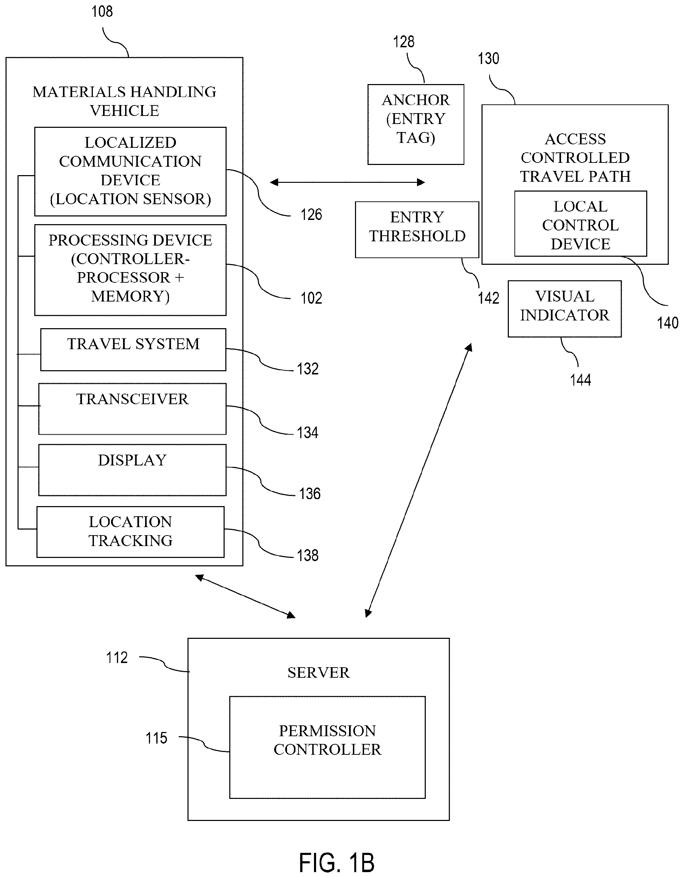

Referring to FIG. 1B, a schematic block diagram illustrates an access control system that coordinates between a materials handling vehicle 108 and an access-controlled travel path 130, according to aspects herein. In this regard, like components from FIG. 1A are illustrated with like reference numerals in FIG. 1B. Details from FIG. 1A can be integrated into the system of FIG. 1B in any combination. Likewise, details from FIG. 1B can be integrated into the system of FIG. 1A in any combination. However, the access control system illustrated in FIG. 1B is not limited to a use in combination with components from FIG. 1A.

The system includes in general, a materials handling vehicle 108, a permission controller 115, and an access-controlled travel path 130.

The materials handling vehicle 108 includes a processing device 102 (controller including a processor and memory), a travel system 132, and a wireless transceiver 134. The travel system 132 is communicatively coupled to the processing device 102. Also, the wireless transceiver 134 on the materials handling vehicle 108 is communicatively coupled to the processing device 102.

The travel system 132 affects at least one travel related performance parameter and/or at least one power related performance parameter of the materials handling vehicle 108. Moreover, the travel system 132 of the materials handling vehicle 108 includes a normal travel mode, a limp travel mode, and a restricted travel mode, e.g., as set out in the definitions, unless otherwise stated.

The materials handling vehicle 108 may also include an optional localized communication device 126 (which can function as a location sensor capable of interacting with an anchor to designate location data identifying the proximity of an access-controlled travel path associated with the anchor). Where provided, the optional localized communication device 126 is communicatively coupled to the processing device 102.

The materials handling vehicle 108 may also include an optional display 136 communicably coupled to the processing device 102.

Similarly, the materials handling vehicle 108 may also include an optional location tracking system 138 communicably coupled to the processing device 102 (e.g., environmental based location tracking system, sensors, etc.).

The access-controlled travel path 130 can include optional anchors 128 (e.g., entry tags) and/or an optional control device 140.

In this regard, the permission controller 115 can be implemented on the materials handling vehicle 108, on a remote server 112 (when utilized), on the local control device 140 (where implemented) of the access-controlled travel path 130, or the permission controller 115 may be distributed there among.

### Example

By way of example, the materials handling vehicle 108 approaches the access-controlled travel path 130. Here, an operator of the materials handling vehicle 108 may intend to enter the access-controlled travel path 130. As another example, an autonomous or semi-autonomous materials handling vehicle 108 may be initially programmed to enter the access-controlled travel path 130. Yet further, the remote computer system, e.g., the permission controller 115, may instruct the materials handling vehicle 108 to enter (or avoid) the access-controlled travel path 130.

### Electronic Message

Initially, a device receives an electronic message that indicates that a materials handling vehicle 108 is approaching the access-controlled travel path 130.

### Electronic Message Received By The Processing Device

In an example embodiment, the electronic message can be received by the processing device 102 on the materials handling vehicle 108.

For instance, a localized communication device 126 on the materials handling vehicle 108 can function as a location sensor, and may be capable of interacting with an anchor 128 (which may be placed in the floor, on racking, in the ceiling, on entryways, over doorways or passageways, etc.) to designate data, such as location data, identifying the proximity of an access-controlled travel path 130 associated with the anchor 128. In this regard, the localized communication device 126 can sense, detect, read, interrogate, communicate with, or otherwise identify the anchor 128 (functioning as an entry tag), thus representing location data identifying the proximity of an associated access-controlled travel path 130 (i.e., indicating that the materials handling vehicle 108 is approaching the access-controlled travel path 130). Here, the processing device 102 can receive the electronic message from the localized communication device 126.

For instance, in some embodiments, the localized communication device 126 is compatible with the anchor 128 to exchange data indicating that the materials handling vehicle 108 is approaching the access-controlled travel path 130. For instance, the localized communication device 126 can communicate with the anchor 128 via Bluetooth, ultra-wideband, Wi-Fi, Zigbee, cellular, etc. As another example, the localized communication device 126 can comprise a radio frequency identification (RFID) reader, whereas the anchor 128 can comprise an RFID tag. Similarly, the localized communication device 126 can comprise a Near Field Communication (NFC) interrogator, whereas the anchor 128 can comprise a NFC tag. As yet another example, the localized communication device 126 can comprise a laser for reading reflections from the anchor 128 implemented as one or more reflectors. Yet further, the localized communication device can comprise a bar code scanner, a QR code scanner, combination thereof, etc., whereas the anchor 128 can comprise a bar code, QR code, etc.

Thus, anchor 128 can be a passive device, a powered device, a non-electronic device, a device without a transceiver, a device with a transceiver, etc. Also, in some embodiments, the anchor 128 can include unidirectional communication capability. Yet further embodiments include an anchor 128 that is capable of bidirectional communication.

In another example, a location tracking system 138 on the materials handling vehicle 108, e.g., an environmental based location tracking system, can detect the proximity of the access-controlled travel path 130. Such can be accomplished autonomously, in combination with location tracking capability on the server 112, in combination with the local control device 140 of the access-controlled travel path 130, or combinations thereof. For instance, the location tracking system 138 may be able to ascertain location data on its own, e.g., via access point or anchor trilateration, using onboard location determination features, etc. The location tracking system 138 may cooperate with the server 112 to identify proximity to the access-controlled travel path 130 based upon virtual geo-features, triangulation, mapping, etc. Regardless, the processing device 102 can receive the electronic message from the location tracking system 138.

In yet another example, the processing device 102 can receive the electronic message via the transceiver 134.

For instance, the electronic message may be communicated to the transceiver 134, from the server 112 tracking the location of the materials handling vehicle 108.

In example implementation, the remote server 112 can actively track the location of the materials handling vehicle 108, and predict that the materials handling vehicle 108 intends to enter an access-controlled travel path 130. In some implementations, the server 112 can use data from any of the data sources 116, FIG. 1A. For instance the server 112 can utilize information from vehicle records (e.g., extracted from the materials handling vehicle information data source 118, FIG. 1A); information such as pick, putaway, or other task assignments from a warehouse management system (e.g., see management system data source 120, FIG. 1A), geo-location data (e.g., from the geo-location system 124, FIG. 1A), combinations thereof, etc., for such predictions.

In yet another example embodiment, the electronic message may be communicated to the transceiver 134, from the local control device 140 (where implemented) detecting the proximity of the materials handling vehicle 108, etc.

In yet another example embodiment, the anchor 128 and/or the local control device 140 can communicate or otherwise broadcast the electronic message (or a code that can be converted to the electronic message) that can be received by the processing device 102 of the materials handling vehicle 108 when in range. For instance, the anchor 128 and/or the local control device 140 can act as a beacon and repeatedly broadcast an identifier of the access-controlled travel path 130. Here, the materials handling vehicle 108 reads the broadcast when in proximity to the access-controlled travel path 130.

As an alternative, the anchor 128 and/or the local control device 140 can detect the presence of the materials handling vehicle 108, and responsive thereto, broadcast an identifier of the access-controlled travel path 130. Here, the materials handling vehicle 108 reads the broadcast when in proximity to the access-controlled travel path 130.

### Electronic Message Received By The Permission Controller

In some embodiments, the permission controller 115 can receive the electronic message indicating that the materials handling vehicle 108 is approaching the access-controlled travel path 130. Here, the permission controller 115 can be external to the materials handling vehicle 108.

For instance, in some embodiments, the electronic message can be received from the transceiver 134 of the materials handling vehicle 108 (such as where the materials handling vehicle 108 can reconcile its proximity to the access-controlled travel path 130 via the localized communication device 126, the location tracking system 138 or otherwise).

In some embodiments, the permission controller 115 can receive the electronic message from a remote server that performs location tracking of the materials handling vehicle 108.

In yet other embodiments, the permission controller 115 can receive the electronic message from the local control device 140, where the local control device 140 can detect the presence of the materials handling vehicle 108.

### Electronic Message Received By The Local Control Device

In some embodiments, the local control device 140 is utilized by the access-controlled travel path 130 and can receive the electronic message indicating that the materials handling vehicle 108 is approaching the access-controlled travel path 130. For instance, in some embodiments, the electronic message can be received from the transceiver of the materials handling vehicle 108 (such as where the materials handling vehicle 108 can reconcile its proximity to the access-controlled travel path 130 via the localized communication device 126, the location tracking system 138 or otherwise). In some embodiments, the local control device 140 can receive the electronic message from a remote server that performs location tracking of the materials handling vehicle 108. In yet other embodiments, the local control device 140 can receive the electronic message from an anchor 128 functioning as an entry tag capable of communicating with the local control device 140, and where the anchor 128 can detect the presence of the materials handling vehicle 108.

### Permission Request

An electronic permission request to enter the access-controlled travel path 130 is then generated responsive to the received electronic message.

For instance, where the materials handling vehicle 108 intends to access the access-controlled travel path 130, (optionally upon the processing device 102 of the materials handling vehicle 108 receiving the electronic message), the processing device 102 can then generate the electronic permission request. In practical applications, the permission request is communicated to the permission controller 115 and designates an intent of the materials handling vehicle 108 to enter the access-controlled travel path 130. In some embodiments, the permission request identifies the materials handling vehicle, the materials handling vehicle type, an operator identification, a task to be completed in the access-controlled travel path, combinations thereof, etc.

In another example embodiment, the electronic permission request is generated by a proxy. For instance, the proxy may be the permission controller 115. In another example, the local control device 140 can generate the permission request and send the permission request to the permission controller 115. The processing device 102 of the materials handling vehicle 108 can then be notified that the permission request was issued.

### Travel System Control Part 1

An electronic command is then issued to set the travel system 132 of the materials handling vehicle 108 to the limp travel mode as the materials handling vehicle 108 engages an entry threshold 142 of the access-controlled travel path 130.

In an example embodiment, the processing device 102 communicates with the travel system 132 to transition the materials handling vehicle 108 from the normal travel mode to the limp travel mode. This may comprise slowing a maximum travel speed, limiting travel distance of the materials handling vehicle 108 into a buffer area of the access-controlled travel path 130, etc.

In an example embodiment, setting the travel system 132 to the limp travel mode may restrict a forward travel distance of the materials handling vehicle 108 into the access-controlled travel path 130 to a predetermined distance beyond the entry threshold 142 (e.g., limiting travel to a designated buffer area). The limp travel mode may also limit thereafter, a travel direction of the materials handling vehicle 108 to a reverse travel direction that exits the access-controlled travel path 130.

### Permission Response

An electronic permission response is then received at the materials handling vehicle 108. For instance, where the permission controller 115 is external to the materials handling vehicle 108, the permission response can be transmitted by the permission controller 115 to the transceiver 134, which passes the permission response to the processing device 102 of the materials handling vehicle 108. Where the permission controller 115 is local to the materials handling vehicle 108, the permission response can be received by the processing device 102 from the permission controller 115.

Regardless, the electronic permission response is received responsive to the generated electronic permission request. Moreover, the electronic permission response indicates whether the access-controlled travel path is in an open state (accessible to the materials handling vehicle 108) or a closed state (locked to the materials handling vehicle 108).

### Travel System Control Part 2

An electronic command is then issued (e.g., by the processing device 102) to set the travel system 132 of the materials handling vehicle 108 to the restricted travel mode when the access-controlled travel path is in the closed state, and an electronic command is issued to set the travel system of the materials handling vehicle to the normal travel mode when the access-controlled travel path is in the open state.

In the closed state, the restricted travel mode can cause the materials handling vehicle 108 to exit out of the access-controlled travel path (e.g., where the materials handling vehicle 108 is in the buffer area of the access-controlled travel path 130). This optionally includes causing the materials handling vehicle 108 to retreat out past the entry threshold 142 and vacate the buffer area of the access-controlled travel path 130 (where implemented).

In the open state, the return of the materials handling vehicle 108 to the normal travel mode enables the materials handling vehicle 108 to proceed into the access-controlled travel path 130 (e.g., into the controlled area of the access-controlled travel path 130). In some embodiments, e.g., using remote location tracking, a current coordinate location of the materials handling vehicle 108 may be reported to the remote server 112 while the materials handling vehicle 108 remains in the access-controlled travel path 130.

In some embodiments, a timer may be engaged (e.g., by the permission controller 115, by the processing device 102 of the materials handling vehicle 108, etc.,) that sets a limited amount of wait time that the materials handling vehicle 108 can remain in the limp travel mode, to provide an opportunity for the access-controlled travel path 130 to clear to the open state before issuing a command for the travel system 132 to implement the restricted travel mode.

### Permission Controller

The permission controller 115 uses logic to determine whether the access-controlled travel path 130 should be designated as the open state or closed state. In an example embodiment, responsive to the generated electronic permission request, the permission controller 115 can carry out a verification that at least one other materials handling vehicle is within the access-controlled travel path 130 before issuing the electronic command to set the travel system of the materials handling vehicle to the restricted travel mode (e.g., by consulting a lookup table, database, etc., that the permission controller 115 uses to keep track of access to the access-controlled travel path 130).

In another embodiment, the permission controller 115 carries out a verification that the access-controlled travel path is currently being used by a resource before issuing the electronic command to set the travel system of the materials handling vehicle to the restricted travel mode, the access-controlled travel path is currently designated as reserved by a resource before issuing the electronic command to set the travel system of the materials handling vehicle to the restricted travel mode, or a combination thereof.

In some embodiments, the permission controller 115 receives operator logon information that identifies an operator of the materials handling vehicle, which is utilized to determine whether the access-controlled travel path 130 should be designated in the open state (unlocked) or closed state (locked). Here, the operator logon information can be transmitted (e.g., via the transceiver 134) with the electronic permission request to access the access-controlled travel path 130. The permission controller 115 receives the electronic permission request and generates a permission response based at least in part, upon the operator logon information. For instance, if the access-controlled travel path is restricted to certain operators (e.g., a bonded area), then operator identification can be utilized to ensure only authorized persons enter the restricted area.

In some embodiments, the permission controller 115 can implement a resource allocation scheme that sets a location access time limit for materials handling vehicles to remain in the access-controlled travel path 130, whereupon a resource within the access-controlled travel path 130 that exceeds its location access time limit is automatically required to exit the access-controlled travel path 130. Another example resource allocation scheme is to set a priority for materials handling vehicles to remain in the access-controlled travel path 130, whereupon a resource within the access-controlled travel path 130 with a lower priority than an approaching resource with a higher priority is automatically required to exit the access-controlled travel path.

In some embodiments, the permission controller 115 can implement a partial segregation of an access-controlled travel path to grant access where a determination is made that allowing access of the materials handling vehicle 108 to the access-controlled travel path 130, despite designation of the closed state, would not violate an access rule. Thus, even though a vehicle may be already present within the access-controlled travel path 130 (justifying a closed state (locked)), the permission controller 115 may still allow the materials handling vehicle 108 to enter, e.g., under specific circumstances, such as where there is no conflict in travel between the vehicles within the access-controlled travel path 130, e.g., due to travel direction, destination within the access-controlled travel path 130, etc.

In some embodiments, the permission controller 115 transmits, upon entry of the materials handling vehicle 108 into the access-controlled travel path 130, an electronic command to toggle a visual indicator 144 disposed proximally to the entry threshold, to cause the visual indicator to visually represent the closed state. Likewise, the permission controller 115 transmits, upon exit of the materials handling vehicle 108 from the access-controlled travel path 130, an electronic command to toggle the visual indicator 144 to represent the open state.

### Operator Interaction

In some embodiments, the materials handling vehicle 108 can include a display 136. A display 136 on the materials handling vehicle 108 can be utilized as a locked access interface to graphically display an indication of at least one closed state ("locked") access-controlled travel path, a time each displayed access-controlled travel path has been in the closed state (locked), a prediction of how long each displayed access-controlled travel path will be in a closed state (locked), or a combination thereof.

The display 136 can optionally form an intercom for communication with another materials handling vehicle 108 within the access-controlled travel path 130 that has the access-controlled travel path locked to the closed state. For instance, a waiting operator may want to query the operator of materials handling vehicle in a locked (closed state) travel path to determine how much longer the travel path will be locked.

Moreover, the display 136 can enable an operator of the materials handling vehicle to define at least one parameter defining a lock placed on the access-controlled travel path 130, the at least one parameter defining a start time of desired restricted access, a duration of restricted access, a size of a restricted access area within the access-controlled travel path 130, or combinations thereof.

In some embodiments, the display 136 can include a user interface that displays information related to a status of an access-controlled travel path within an environment, wherein the status of the access-controlled travel path is defined as an open state or a closed state. Here, an operator can interact with the user interface such that the permission controller 115 receives a reservation request where the access-controlled travel path status is open, and electronically identifies the access-controlled travel path as having the closed status during a time associated with the reservation.

### Miscellaneous

In some embodiments, the permission controller 115 automatically unlocks the access-controlled travel path 130 and transitions the access-controlled travel path 130 to an open state upon detecting that the materials handling vehicle 108 exited the access-controlled travel path 130. For instance, the permission controller 115 can receive a transmitted exit signal when the materials handling vehicle 108 has occupied the access-controlled travel path 130 and has traveled back over the entry threshold 142 so as to exit the access-controlled travel path 130.

Moreover, in some embodiments, the permission controller 115 will allow an override. For instance, the permission controller 115 may receive an override command from an operator of the materials handling vehicle 108 to alter the state of the access-controlled travel path 130. If the permission controller 115 approves the override, the permission controller 115 can transmit an override command to the materials handling vehicle 108 to enable access to the access-controlled travel path 130.

In some embodiments, the processing device 102 includes a controller including a memory device storing executable instructions. The processing device 102 also includes a processor communicably coupled to the memory device. The processor, when executing executable instructions read out from the memory device, can carry out the example provided above. That is, the processor can receive an electronic message that indicates that the materials handling vehicle is approaching an access-controlled travel path, and generate an electronic permission request to enter the access-controlled travel path responsive to the received electronic message. The processor can further issue an electronic command to set the travel system of the materials handling vehicle to the limp travel mode as the materials handling vehicle engages an entry threshold, and receive, via the wireless transceiver of the materials handling vehicle, an electronic permission response, where the electronic permission response is received responsive to the generated electronic permission request, and the electronic permission response indicates whether the access-controlled travel path is in an open state or a closed state. The processor can further issue an electronic command to set the travel system of the materials handling vehicle to the restricted travel mode when the access-controlled travel path is in the closed state. Likewise, the processor can issue an electronic command to set the travel system of the materials handling vehicle to the normal travel mode when the access-controlled travel path is in the open state.

### Instruction vs Automated Control

In some embodiments, electronic information is conveyed back to the materials handling vehicle 108 in the form of an instruction. For instance, an instruction granting permission or denial can be output to a display on the materials handling vehicle for an operator to follow. The instruction can optionally also output attribution information that explains why permission or denial was granted.

In some alternative embodiments, electronic information is conveyed back to the materials handling vehicle 108 in the form of an electronic command that automatically controls the materials handling vehicle 108 without the need for operator intervention or control.

### Control System

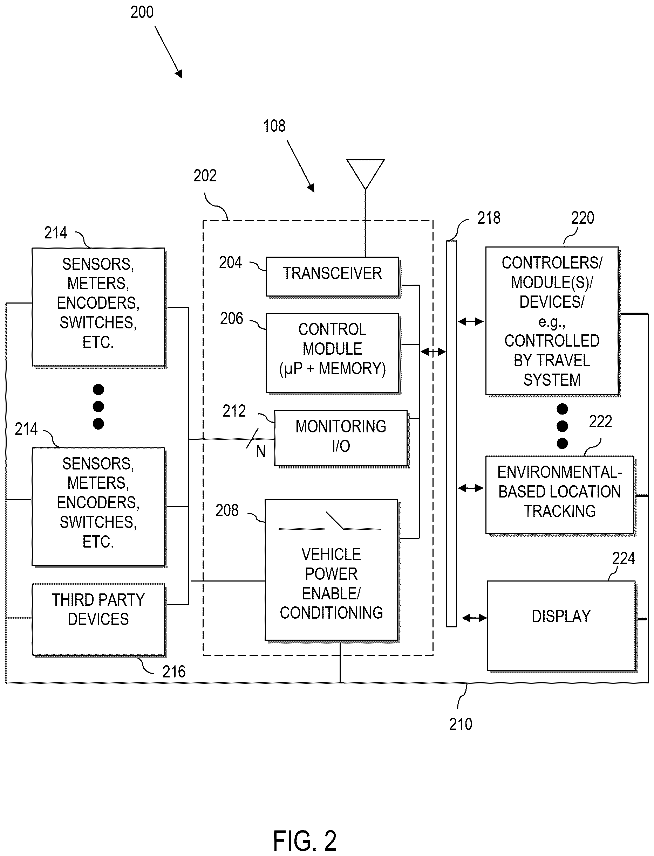

Referring to Fig. 2, a block diagram illustrates a control system 200 for one or more of the materials handling vehicles 108 of FIG. 1A, FIG. 1B, which is implemented as an information linking device 202. The information linking device 202 can implement the processing device 102 (implemented as the information linking device) of FIG. 1A. Likewise, the control system 200 can implement features of the materials handling vehicle as illustrated in FIG. 1B.

The information linking device 202 comprises the necessary circuitry to implement wireless communication, data and information processing, and wired and wireless communication to components of the materials handling vehicle 108.

The illustrated information linking device 202 includes a transceiver 204 for wireless communication (analogous to transceiver 134, FIG. 1B). Although a single transceiver 204 is illustrated for convenience, in practice, one or more wireless communication technologies may be provided, e.g., analogous to the localized communication device 126 FIG. 1B, transceiver 134, FIG. 1B, combinations thereof, etc.

The information linking device 202 also comprises a control module 206 (e.g., analogous to 102, FIG. 1B), having a processor coupled to memory for implementing computer instructions, including computer-implemented processes, or aspects thereof in any combination, as set out and described more fully herein, e.g., with reference to FIG. 1A, FIG. 1B, FIG. 3- FIG. 8, etc.

The information linking device 202 further includes power enabling circuitry 208 controlled by the control module 206 to selectively enable or disable the materials handling vehicle 108 (or alternatively, to selectively enable or disable specific control modules or vehicle functions such as hydraulic, traction, etc.). For instance, the control module 206 can control the power enabling circuitry 208 to provide power to the materials handling vehicle 108, to provide (or disable) power to select components of the materials handling vehicle 108, to provide (or disable) power for select vehicle functions, etc., via power line 210, e.g., based upon operator login, detected geo-features, state o the travel system, etc. In some embodiments, the travel system (132, FIG. 1B) may utilize the power enabling circuitry to disable a materials handling vehicle, e.g., in restricted travel mode, to deal with violations of rules, etc.

Still further, the information linking device 202 includes a monitoring input/output (I/O) module 212 to communicate via wired or wireless connection to peripheral devices attached to or otherwise mounted on the materials handling vehicle 108, such as sensors, meters, encoders, switches, lights, etc. (collectively represented by sensors 214). The monitoring I/O module 212 may also be connected to other devices, e.g., third party devices 216 such as RFID scanners, displays, meters or other devices. This allows the control module 206 to obtain and process information monitored on the materials handling vehicle 108.

The information linking device 202 is coupled to and/or communicates with other industrial vehicle system components via a suitable vehicle network 218. The vehicle network 218 is any wired or wireless network, bus or other communications capability that allows electronic components of the materials handling vehicle 108 to communicate with each other. As an example, the vehicle network 218 may comprise a controller area network (CAN) bus, Local Interconnect Network (LIN), time-triggered data-bus protocol (TTP) or other suitable communication technology.

As will be described more fully herein, utilization of the vehicle network 218 enables seamless integration of the control module 206 and other components of the information linking device 202 into native electronics of the materials handling vehicle 108. In the example configuration, the control module 206 of the information linking device 202 connects with, understands and is capable of communication with native vehicle electronic components 220, such as traction controllers, hydraulic controllers, modules, localized communication devices (the localized communication device, 126, FIG. 1B), bus enabled sensors, displays, lights, light bars, sound generating devices, headsets, microphones, haptic devices, etc., thus enabling the travel system 132, FIG. 1B to control the materials handling vehicle modes.

According to yet further aspects of the present disclosure, an optional environmental-based location tracking device 222 (e.g., analogous to the location tracking system 138, FIG. 1B) is provided on the materials handling vehicle 108. As illustrated, the environmental-based location tracking device 222 is connected to the vehicle electronics via the vehicle network 218 (e.g., via a CAN bus). As a result, the environmental-based location tracking device 222 can communicate directly with the control module 206, as well as other devices linked to the vehicle network 218 of the corresponding materials handling vehicle 108. The environmental-based location tracking device 222 includes a location sensor that enables the materials handling vehicle 108 to be spatially aware of its location within a dimensionally constrained environment, e.g., a mapped portion of an industrial enterprise.

A conventional technology such as a global positioning system (GPS) is not likely to be effective when the materials handling vehicle 108 is operated indoors. However, the environmental-based location tracking device 222 can comprise a local awareness system that utilizes markers, including fiducial markers, RFID, beacons, lights, other external devices, combinations thereof, etc., to allow spatial awareness within the industrial (e.g., warehouse, manufacturing plant, etc.) environment. Moreover, local awareness can be implemented by machine vision guidance systems, e.g., using one or more location sensors, e.g., cameras. The environmental-based location tracking device 222 may also/alternatively use location sensors such as transponders and triangulation calculations to determine position.

Yet further, the environmental-based location tracking device 222 and/or other controller on the materials handling vehicle 108 (e.g., the processor within the control module 206) can use combinations of the above and/or other technologies to determine the current (real-time) position, or relative travel (e.g., position, distance traveled, orientation, etc.) of the materials handling vehicle 108. As such, the position (or at least the travel distance) of the materials handling vehicle 108 can be continuously ascertained (e.g., every second or less) in certain implementations. For instance, knowledge read from inertial sensors, vehicle sensors, encoders, accelerometers, gyroscopes, etc., (e.g., via the controllers (see native vehicle electronic components 220) across the vehicle network 218, via sensors 214 and/or third-party devices 216 across the monitoring I/O module 212 and vehicle network 218, etc.) can be utilized to determine the position, direction, orientation, travel distance, etc., of the materials handling vehicle 108 within the environment and/or to augment or modify the position determination from the environmental-based location tracking device 222.

Alternatively, other sampling intervals can be derived to (e.g., at discrete defined time intervals, periodic or otherwise constant and recurring time intervals, intervals based upon interrupts, triggers or other measures) determine industrial vehicle position over time.

The control module 206 also communicates with a vehicle display 224 (e.g., analogous to the display 136, FIG. 1B), e.g., a touchscreen, display screen, etc. The vehicle display 224 is typically mounted in the operator's compartment and provides widgets and other display information.

In some implementations, the materials handling vehicle includes a travel system (e.g., analogous to the travel system 132, FIG. 1B). The travel system in some implementations, may be implemented in the control module 206 cooperative with one or more native vehicle electronic components 220, e.g., vehicle controllers, a traction control module, a hydraulics control module, a steer angle or travel direction control module, etc. In other implementations, a travel system is implemented as a native vehicle electronic component 220 (e.g., a module) that communicates across the vehicle network 218. In yet other implementations, the travel system is implemented as a third-party device 216 that communicates via monitoring I/O module 212 with the control module 206, controllers (or other native vehicle electronic components 220), or a combination thereof.

### Example Industrial Location Access Control Implemented as Aisle Control

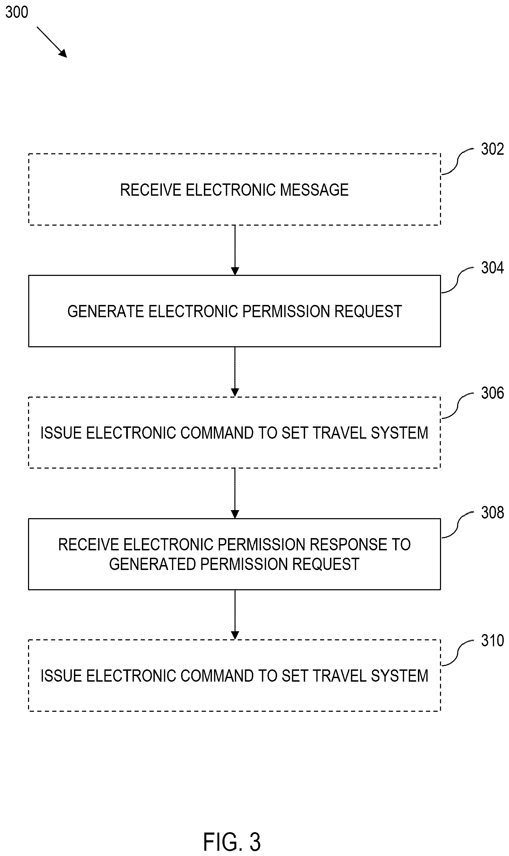

Referring to FIG. 3, a process 300 for access control in an industrial environment is provided. The process 300 is operable on any combination of systems and hardware discussed herein previously, e.g., with regard to FIG. 1A, FIG. 1B, and FIG. 2, in any combination. The process 300 can also be implemented using any combination of aspects described in the subsequent FIGURES.

The process 300 optionally comprises receiving at 302, an electronic message. For instance, the process 300 may comprise receiving an electronic message that indicates that a materials handling vehicle is approaching an access-controlled travel path, e.g., using any combination of features as analogously described with reference to FIG. 1B. For instance, the disclosure under the heading "Electronic Message" and all subheading sections, as described with reference to FIG. 1B can apply by analogy to FIG. 3 in any combinations thereof.

In an example implementation, the materials handling vehicle may also have a travel system having one or more modes. For instance, a travel system may comprise a normal travel mode, a limp travel mode, a restricted travel mode, combinations thereof, etc., analogous to that described more fully herein.

The process 300 comprises generating at 304, an electronic permission request. For instance, the process 300 may comprise generating an electronic permission request to enter the access-controlled travel path. Moreover, the generated message may be responsive to the received electronic message (i.e., the optional electronic message received at 302). In this regard, the disclosure under the heading "Permission Request", as described with reference to FIG. 1B can apply by analogy to FIG. 3 in any combinations thereof.

The process 300 may further optionally comprise issuing at 306, an electronic command to set the travel system of the materials handling vehicle. By way of example, the process can comprise issuing an electronic command to set the travel system of the materials handling vehicle to a limp travel mode as the materials handling vehicle engages an entry threshold of the access-controlled travel path. Such is not strictly required, but may be advantageous, e.g., to add a failsafe as the materials handling vehicle awaits instructions on entering the access-controlled travel path. In some implementations by way of non-limiting example, limp travel mode may restrict a forward travel distance of the materials handling vehicle into the access-controlled travel path, to a predetermined distance beyond the entry threshold, and limit thereafter, a travel direction of the materials handling vehicle to a reverse travel direction that exits the access-controlled travel path.

In this regard, the disclosure under the heading "Travel System Control Part 1", as described with reference to FIG. 1B can apply by analogy to FIG. 3 in any combinations thereof.

The process 300 yet further comprises receiving at 308, an electronic permission response to the generated electronic permission request. For instance, the process can comprise receiving, via a transceiver of the materials handling vehicle, an electronic permission response, where the electronic permission response is received responsive to the generated electronic permission request. In this regard, the disclosure under the heading "Permission Response", as described with reference to FIG. 1B can apply by analogy to FIG. 3 in any combinations thereof.

As an example, the electronic permission response can comprise a determination of whether the access-controlled travel path is in an open state or a closed state. For instance, the open state can refer to an unlocked travel path, where the access-controlled travel path is accessible to the materials handling. Thus, the access-controlled travel path (e.g., an aisle) may be free of materials handling vehicles or otherwise deemed open for access to the requesting materials handling vehicle. Similarly, the closed state can refer to the access-controlled travel path being temporarily locked or closed, e.g., due to another materials handling vehicle currently occupying the travel path, due to the travel path being deemed closed due to a spill, servicing, congestion, maintenance, other reason, etc.

As an example, responsive to the generated electronic permission request, a verification can be performed (e.g., by the permission controller) that: at least one other materials handling vehicle is within the access-controlled travel path, the access-controlled travel path is currently being used by a resource, the access-controlled travel path is currently designated as reserved by a resource, combinations thereof, etc., before issuing the electronic command to set the travel system of the materials handling vehicle to the restricted travel mode.

Additionally, the process 300 can comprise issuing, at 310, an electronic command to set the travel system. In this regard, the disclosure under the heading "Travel System Control Part 2", as described with reference to FIG. 1B can apply by analogy to FIG. 3 in any combinations thereof.

As a non-limiting but illustrative example, the process may comprise issuing an electronic command to set the travel system of the materials handling vehicle to the restricted travel mode when the access-controlled travel path is in the closed state. As another example, the process may perform issuing an electronic command to set the travel system of the materials handling vehicle to the normal travel mode when the access-controlled travel path is in the open state (e.g., where the materials handling vehicle is not already in the normal travel mode.

In some implementations, when a travel path is closed, the electronics on the materials handling vehicle positively prevent the materials handling vehicle from entering the closed travel path. In other configurations, the closed state may be presented as a warning, instruction, or other feedback to an operator. In yet further example implementations, the electronics on the materials handling vehicle may initially prevent the vehicle from entering the closed travel path, but the restriction can be overridden by the operator. The override may be initiated by a control on a graphical user interface (e.g., touchscreen display), by requesting the override from a management system, by engaging the drive/steer controls, or by other means. Here, the operator can use discretion as to whether to enter the restricted travel path, or to vacate the area (at least temporarily).

Some embodiments may implement a resource allocation scheme that may set a location access time limit for materials handling vehicles to remain in the access-controlled travel path. Here, a resource within the access-controlled travel path that exceeds its location access time limit is automatically required to exit the access-controlled travel path. The allocation scheme may also/alternatively set a priority for materials handling vehicles to remain in the access-controlled travel path, whereupon a resource within the access-controlled travel path with a lower priority than an approaching resource with a higher priority is automatically required to exit the access-controlled travel path.

As another example, some embodiments may engage a timer that sets a limited amount of wait time that the materials handling vehicle can remain in the limp travel mode, to provide an opportunity for the access-controlled travel path to clear to the open state before issuing a command for the travel system to implement the restricted travel mode.

In some implementations, electronics on the materials handling vehicle, e.g., via the control module 206 (FIG. 2), electronically records when an operator attempts to enter a travel path that is open only, closed only, or both. Such is useful, e.g., when an operator enters a closed travel path. Assuming the travel path is closed due, for example, to another materials handling vehicle occupying the travel path (e.g., an aisle, VNA, etc.), maintenance, etc. The operator may be trained to look down the restricted travel path (e.g., aisle) and only enter if there is no conflict, e.g. no other materials handling vehicle is in the travel path, no congestion, no maintenance, no spill or other adverse condition, etc. In some implementations, recording this instance would allow later training and coaching of the operator or other operators, e.g., buy a by the manager.

In some implementations, if a travel path is designated as closed, then the materials handling vehicle may be required to vacate access to the travel path. This may require the materials handling vehicle to alter a travel direction, e.g., back up, turn around, etc. Driving away from a closed access-controlled travel path may be carried out with the materials handling vehicle set to a different travel mode, performance tuned down, returned to normal operating conditions, etc.

For instance, in some implementations, the closed state may be due to another materials handling vehicle already occupying the access-controlled travel path. Here, if the materials handling vehicle is denied access (travel path is closed) and the other materials handling vehicle is nearby, e.g., within *x* meters where *x* is any reasonable number, then the speed or other parameters of the materials handling vehicle may be performance tuned down. On the other hand, if the materials handling vehicle is denied access, and the other materials handling vehicle is occupying the travel path, but at a significant distance away (e.g., more than x meters away - such as at the opposite end of a lane), then the travel of the materials handling vehicle may be unconstrained, or tuned less than the situation where the other materials handling vehicle is nearby, e.g., for purposes of turning around and vacating the travel path. For instance, the materials handling vehicle can operate in a limp travel mode when the other materials handling vehicle is nearby, but in some speed greater than the limp travel mode if the other materials handling vehicle is not nearby. Thus, a reverse travel speed can be dynamically set based upon environmental/extrinsic factors.

Some embodiments may implement a partial segregation of a locked access-controlled travel path to grant access where a determination is made that allowing access of the materials handling vehicle to the access-controlled travel path, despite designation of the closed state, would not violate an access rule. For instance, if the server knows that the materials handling vehicle needs to only access a first end of a long aisle, and the lock is because of a vehicle only working at the opposite end of the long aisle, permission to enter may be granted.

Any other features, structures, etc., described with reference to FIG. 1A and/or FIG. 1B may be applied to the process 300. For instance, the disclosure under the heading "Permission Controller", "Operator Interaction", "Miscellaneous", combinations thereof, etc., as described with reference to FIG. 1B can apply by analogy to FIG. 3 in any combinations thereof.

### Example Implementation

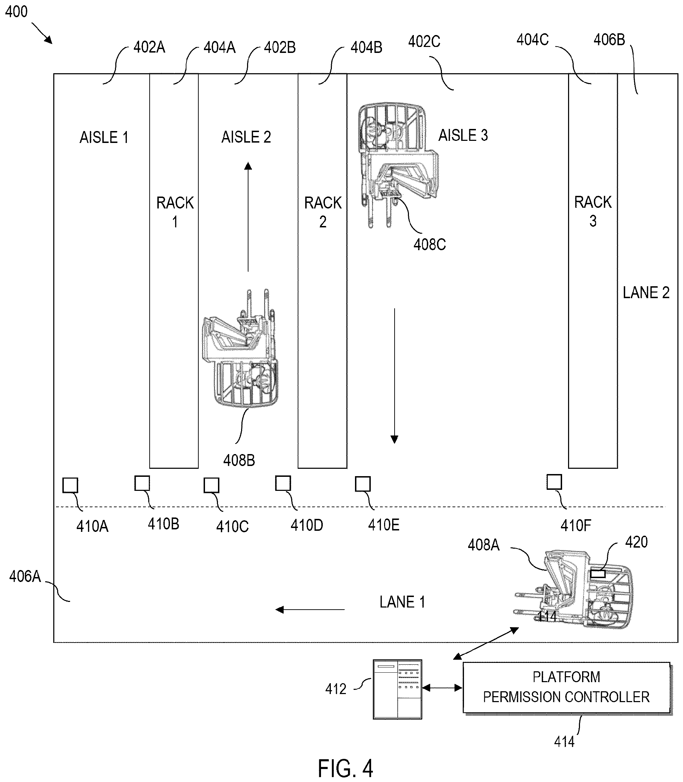

Referring to FIG. 4, an example environment 400 is illustrated, which is suitable for carrying out aspects of the system (FIG. 1A and/or FIG. 1B), the process 300 (FIG. 3), or any combination thereof. The environment 400 can also incorporate any one or more of the features disclosed with reference to the preceding FIGURES in any combination. Also, the implementation can incorporate any features described with regard to subsequent FIGURES in any combination.

The environment 400 is presented by way of illustration and not by way of limitation for performing industrial location control. In the illustrative example, the environment 400 includes a series of aisles separated by racking, which is customary and exemplary of many warehouse and other storage environments.

More particularly, there are three aisles illustrated, including aisle 402A (also designated as Aisle 1), aisle 402B (also designated Aisle 2), and aisle 402C (also designated as Aisle 3). Here, for sake of clarity, Aisle 1 and Aisle 2 are VNA aisles. Aisle 3 is a wide aisle.

Likewise, there are three racks illustrated, including rack 404A (also designated as Rack 1), rack 404B (also designated Rack 2), and rack 404C (also designated as Rack 3).

Moreover, the environment 400 illustrates a first travel lane 406A (also designated as Lane 1) and a second travel lane 406B (also designated as Lane 2). For sake of this example, there are three materials handling vehicles illustrated. Materials handling vehicle 408A is traveling along Lane 1. Materials handling vehicle 408B is traveling along Aisle 2 in a direction away from Lane 1. Materials handling vehicle 408C is traveling down Aisle 3 in a direction towards Lane 1.

A server 412 runs a permission controller 414 (analogous to server 112, FIG. 1A, FIG. 1B, and permission controller 115, FIG. 1A, FIG. 1B). As such, any previous discussion of the permission controller 115 can be applied to the permission controller 415.

### Example Access Control - Aisle 1

In this example, assume that materials handling vehicle 408A would like to travel within Aisle 1. Access control of Aisle 1 in this industrial environment can be carried out by the process 300 (FIG. 3) and/or the systems of FIG. 1A, FIG. 1B, FIG. 2.

For instance, an electronic message (e.g., 302, FIG. 3) may be received that indicates that the materials handling vehicle 408A is approaching an access-controlled travel path (Aisle 1 in this example). See also, analogous disclosure with reference to FIG. 1B. For sake of example, the electronic message can be generated responsive to the materials handling vehicle 408A reading or exchanging information with nearby tag 410A and/or tag 410B (which can be analogous to the anchor (entry tag) 128 of FIG. 1B).

In other implementations, physical tags (or anchors) are not required or may be virtual, so long as Aisle 1 is identified as an access-controlled travel path, and the materials handling vehicle 408A is identified as wanting permission to enter the access-controlled travel path (Aisle 1, aisle 402A).

Regardless, an electronic permission request is generated (304, FIG. 3) to enter the access-controlled travel path, e.g., responsive to the received electronic message. See also, analogous disclosure with reference to FIG. 1B.

As the materials handling vehicle 408A engages an entry threshold of the access-controlled travel path, an electronic command may be issued (e.g., electronic command issued at 306, FIG. 3) to the travel system of the materials handling vehicle 408A, such as to select a mode such as the limp travel mode. See also, analogous disclosure with reference to FIG. 1B. See also, the travel system of FIG. 2.

Where implemented, the limp travel mode provides a failsafe, as the materials handling vehicle 408A is in a reduced functionality and/or speed mode while waiting for authorization to enter the access-controlled travel path (Aisle 1 in this example).

In practical applications, the access-controlled travel path can include a "buffer area" and a "controlled area". The limp travel mode may restrict access to the buffer area (e.g., 20 feet or approximately just over 6 meters in front of or just slightly encroaching Aisle 1 in this example).

The entry threshold of the access-controlled travel path can be defined in a number of ways. For instance, the entry threshold can be established where the materials handling vehicle 408A approaches the entry of Aisle 1, e.g., based upon interaction with tag 410A and/or tag 410B. As a few examples, the entry threshold can be established based upon signal strength of communication with a corresponding tag, detected distance to a tag, based upon detecting that the materials handling vehicle 408A has passed or is between tags, e.g., tag 410A and tag 410B in this example. In practice, the ingress, egress, lanes of traffic, access-controlled travel path, and other parameters can define the entry threshold.

A transceiver (e.g., see transceiver 204, FIG. 2) of the materials handling vehicle 408A, receives an electronic permission response (e.g., electronic permission response received at 308, FIG. 3) responsive to the generated electronic permission request. See also, analogous disclosure with reference to FIG. 1B. Here, the electronic permission response provides a determination of whether the access-controlled travel path is in an open state or a closed state.

As an example, there is currently no materials handling vehicle in Aisle 1 and there or no other pending reasons to restrict access. As such, the access-controlled travel path (Aisle 1) could be in an open state. Here, an electronic command may be issued (e.g., electronic command issued at 310, FIG. 3) to set the travel system of the materials handling vehicle 408A to the normal travel mode. This enables the materials handling vehicle 408A to enter Aisle 1.

In some implementations, the materials handling vehicle 408A remains in the limp travel mode for a prescribed duration before transitioning to the normal travel mode. In other implementations, a fade or graduated control is implemented to prevent sudden lunges or erratic changes to the expected operation of the industrial vehicle.

In some embodiments, upon entry of the materials handling vehicle 408A into the access-controlled travel path, an electronic command may be transmitted to toggle a visual indicator (e.g., see visual indicator 144, FIG. 1B) disposed proximally to the entry threshold (e.g., to turn on an illumination device, change a color of the illumination device, etc.), to cause the visual indicator to visually represent the closed state. Similarly, upon the materials handling vehicle 408A exiting the access-controlled travel path, the system may transmit an electronic command to toggle the visual indicator to cause the visual indicator to visually represent the open state (by turning off the illumination device, changing color of the illumination device, etc.).

In some embodiments, the access-controlled travel path is automatically unlocked, and the access-controlled travel path is transitioned to the open state upon the materials handling vehicle 408A exiting the access-controlled travel path (Aisle 1). As another example, an exit signal can be transmitted where the materials handling vehicle 408A has occupied the access-controlled travel path (Aisle 1) and has traveled back over the entry threshold so as to exit the access-controlled travel path.

Some embodiments perform, responsive to the generated electronic permission request, a verification as to whether the access-controlled travel path is currently being used by a resource or currently designated as reserved by a resource, to determine whether to issue the electronic command to set the travel system of the materials handling vehicle to the restricted travel mode.

As an example, Aisle 1 may be shut down for maintenance, may be shut down due to a spill or other dynamic condition, may be reserved by another materials handling vehicle, may be bonded, may be reserved for only those materials handling vehicles having permission to enter, etc., and as such, Aisle 1 may be in a closed state regardless of whether a materials handling vehicle is physically present in the Aisle. Here, an electronic command may be issued (e.g., electronic command issued at 310, FIG. 3) to set the travel system of the materials handling vehicle 408A to another mode, e.g., a restricted travel mode. Moreover, the operator of the materials handling vehicle 408A may reverse direction to exit the aisle (Aisle 1). Upon navigating away from Aisle 1 (the access-controlled travel path in this example), the travel control system may adjust the operation of the materials handling vehicle to some performance higher than the restricted travel mode, e.g., the normal travel mode or some set points in between.

In this regard, a remote server (server 112, FIG. 1A, FIG. 1B) may include an access restricted travel path allocation database that stores a current state of travel paths (e.g., using one or more data source(s) 116, FIG. 1A). The allocation database may also store travel path data according to a calendar or other reservation system so that future events may be accounted for when making access decisions, etc. The server may also include a rules engine/database for making decisions based upon a request for access to a travel path, a reservation of a travel path, a current state of usage of a travel path, an authorization override withdrawing permission to enter a travel path, an authorization override granting permission to enter a travel path, an indication of congestion or other extrinsic/environmental factors, an indication of a temporary closure of a travel path or access to the travel path (e.g., for inventory control, etc.), knowledge of specific pick or putaway locations (e.g., via management system data source 120 (FIG. 1A)) with respect to the ability of multiple materials handling vehicles to be simultaneously present in a travel path, an ability to redirect/reschedule, combinations thereof, etc.

In some implementations, the materials handling vehicle 408A may be able to actively query the allocation database to make decisions before even approaching the access-controlled travel path. For instance, assume that the materials handling vehicle 408A needs to access Aisle 1 and Aisle 2. If the materials handling vehicle 408A is deciding upon tasks, a processor on the materials handling vehicle 408A can query the allocation database and determine, for instance, that Aisle 2 is closed but Aisle 1 is open so the materials handling vehicle 408A may decide to travel straight to Aisle 1.

### Example Access Control - Aisle 2

In another example, the materials handling vehicle 408A may want to enter Aisle 2. Here, the same procedure is followed as described with reference to Example 1, except that the travel path is Aisle 2 instead of Aisle 1. Also, an entry threshold of the access-controlled travel path is designated as tag 410C and/or tag 410D analogous to tag 410A and/or tag 410B associated with Aisle 1.

An electronic command is issued to set the travel system of the materials handling vehicle 408A to the limp travel mode as the materials handling vehicle engages the entry threshold of the access-controlled travel path (Aisle 2), using any previously disclosed limp travel mode implementations.

A permission controller (e.g., permission controller 115, FIG. 1A, FIG. 1B) can perform, responsive to the generated electronic permission request, a verification that at least one other materials handling vehicle is within the access-controlled travel path. Here, since Aisle 2 is a single-wide lane (e.g., VNA) and since the materials handling vehicle 408B is already using the lane, the permission to enter Aisle 2 may be denied. That is, Aisle 2 is marked by the server as being in the closed state (i.e., locked to other materials handling vehicles). This provides an example to more clearly describe some optional features.

In some embodiments, this may trigger an electronic command to set the travel system of the materials handling vehicle 408A to a mode such as the restricted travel mode. However, in other embodiments, before triggering the change to the restricted travel mode, the materials handling vehicle 408A enters the limp travel mode (see electronic command issued at 306, FIG. 3) upon engaging tag 410C and/or tag 410D. A timer sets a limited amount of wait time that the materials handling vehicle 408A can remain in the limp travel mode, to provide an opportunity for the access-controlled travel path to clear to the open state before issuing a command for the travel system to implement the restricted travel mode.

In some instances, the materials handling vehicle 408A may have a few options available for a next task. As such, in some implementations, the travel control and/or remote server 412 can perform, responsive to the generated electronic permission request, a verification that Aisle 2 is currently being used by a resource (e.g., inventory, maintenance, reserved by another materials handling vehicle but not occupied, etc.) before issuing the electronic command to set the travel system of the materials handling vehicle to the restricted travel mode.

As another example, by applying a timer between the limp travel mode and the restricted travel mode, the remote server 412 can verify that the materials handling vehicle 408B is in Aisle 2. As such, materials handling vehicle 408A may not want to wait for Aisle 2 to clear, so instead of entering a more restricting mode (e.g., the restricted travel mode), the materials handling vehicle 408A can maneuver out of engagement with Aisle 2 to perform another task, e.g., enter Aisle 1 as described above.

In some implementations, the materials handling vehicle 408A can enter the restricted travel mode, which prevents the materials handling vehicle 408A from traveling into Aisle 2. Also, as noted more fully herein, in some implementations, the operator can override the restricted travel mode and enter the aisle. For instance, an operator may be able to visually observe that the materials handling vehicle 408B would not interfere with an operation, e.g., a pick or putaway near the aisle entry. For instance, upon receiving an override command from an operator of the materials handling vehicle 408A to alter the state of the access-controlled travel path (Aisle 1), the system can transmit an override command, and the permission controller can identify the materials handling vehicle 408A as having permission to enter the access-controlled travel path. Here, the operator may receive a warning, e.g., light, buzzer, etc., but can override the warning to carry out a task.

The process can optionally record when an operator attempts to enter a closed aisle. Assuming the aisle is closed due to materials handling vehicle 408B, the operator may be trained to look down the aisle and only enter where no other vehicles are in the aisle, where another vehicle is in the aisle but driving away from the operator, where the other vehicle is more than x meters from where in the aisle the operator intends to navigate, combinations thereof, etc. Recording this instance would allow later training and coaching, e.g., by a manager.

Alternatively, the operator of materials handling vehicle 408A may decide to back up/reverse direction to exit Aisle 2 and head to another location. In this example, materials handling vehicle 408B is traveling away from materials handling vehicle 408A. As such, the system may decide to switch the materials handling vehicle 408A to the normal travel mode or some other mode so long as materials handling vehicle 408A is clearly vacating a position to enter Aisle 2. For instance, the system can set and/or modify a reverse speed limit to allow the materials handling vehicle 408A to vacate a position to enter Aisle 2. Here, the speed of materials handling vehicle 408A could be set back to full speed or a speed higher than a maximum speed enabled by the limp travel mode.

In yet other implementations, a decision can be made to enable materials handling vehicle 408A to receive an increased maximum speed limit. For instance, if there are no other vehicles around materials handling vehicle 408A, then full speed may be enabled. However, if there is a third materials handling vehicle approaching, then even a maximum reverse speed can be reduced. For instance, a maximum reverse speed can be set to a speed from normal speed down to a speed associated with the limp travel mode. In this regard, if a third materials handling vehicle attempts to enter Aisle 2, the same considerations as set out above apply.

Moreover, if materials handling vehicle 408B had a performance modification, e.g., to the limp travel mode or some restrictive mode due to the presence of materials handling vehicle 408A, then the performance of materials handling vehicle 408B can be restored, modified, etc., to reflect that it remains in sole custody of Aisle 2 upon materials handling vehicle 408A leaving. For instance, materials handling vehicle 408B can be removed from the limp travel mode and placed into the normal travel mode, fully operational mode, some mode where operation is between normal operation and the limp travel mode, etc.

In some implementations, the process may implement a resource allocation scheme that sets a location access time limit for materials handling vehicles to remain in the access-controlled travel path (e.g., time limit for the materials handling vehicle 408B to remain within Aisle 2), whereupon a resource within the access-controlled travel path that exceeds its location access time limit may be automatically required to exit the access-controlled travel path. For instance, Aisle 2 may be locked based upon a permission scheme by only scheduling materials handling vehicle 408B to remain in Aisle 2 for 3 minutes, then requiring the vehicle to exit to allow another vehicle to enter. This timing may be presented, e.g., on a display of the materials handling vehicle 408B and/or the materials handling vehicle 408A. This allows the operator of materials handling vehicle 408A to decide whether to wait to access Aisle 2 or to maneuver away from Aisle 2 to perform a different task.

In some implementations, the process can implement a resource allocation scheme that sets a priority for materials handling vehicles to remain in the access-controlled travel path, whereupon a resource within the access-controlled travel path with a lower priority than an approaching resource with a higher priority is automatically required to exit the access-controlled travel path. Thus, materials handling vehicle 408B may be required to vacate Aisle 2 if materials handling vehicle 408A attempts to enter Aisle 2, where materials handling vehicle 408A has a higher priority than the priority of materials handling vehicle 408B. As another example, a prioritized scheme to override an existing lock may be implemented (e.g., where a high priority pick or put away causes an instruction to immediately vacate and unlock an aisle). This can potentially be generalized into requesting materials handling vehicle 408B to leave Aisle 2 to grant rights to the materials handling vehicle 408A even though the materials handling vehicle 408A is a later arriving vehicle to Aisle 2 than materials handling vehicle 408B.

Thus, even though materials handling vehicle 408B is presently in Aisle 2, materials handling vehicle 408A can wait in the limp travel mode for a short time until materials handling vehicle 408B exits Aisle 2.

As an additional example, assume materials handling vehicle 408A is waiting in the restricted travel mode for materials handling vehicle 408B to finish using Aisle 2. In some implementations, the travel control system automatically unlocks the access-controlled travel path (Aisle 2) and transitions the access-controlled travel path to an open state for materials handling vehicle 408A by virtue of the remote server 412 detecting that the materials handling vehicle 408B has exited the access-controlled travel path (Aisle 2 in this example). For instance, the materials handling vehicle 408B can report a current coordinate location to the remote server 412 while the materials handling vehicle 408B remains in the access-controlled travel path (Aisle 2 in this example).

Alternatively, the remote server 412 can track the location of the materials handling vehicle 408B without requiring receiving electronic messages from the vehicle itself, as described more fully herein. Here, the remote server allows access to the materials handling vehicle 408A by setting Aisle 2 to the open state, then transitioning Aisle 2 to the closed (locked) state for all other materials handling vehicles.

In this example, materials handling vehicle 408B is traveling away from Lane 1. As such, the system may decide, e.g., when materials handling vehicle 408B gets far enough down Aisle 2, to allow materials handling vehicle 408A to enter Aisle 2. Here, both materials handling vehicle 408A and materials handling vehicle 408B may be allowed to operate in the normal travel mode, each may be controlled to operate in the limp travel mode or some restricted travel mode, or each may be set to a different mode. Moreover, the mode of each of materials handling vehicle 408A and materials handling vehicle 408B can be based upon the distance therebetween, based upon their assigned task (e.g., pick and/or putaway locations), based upon travel direction, based upon vehicle orientation (power unit first or load handling/forks first), combinations thereof, etc.

As still another example, assume again that Aisle 2 is in a closed state due to materials handling vehicle 408B. For a closed aisle, if materials handling vehicle 408A enters Aisle 2, then a maximum speed of both materials handling vehicle 408A and materials handling vehicle 408B may be reduced, e.g., to that of the limp travel mode, the restricted mode, or some maximum speed less than normal speed. Slowing both vehicles makes both operators aware that another vehicle has entered Aisle 2. Such an action can include a warning, buzzer, light, message, etc. to each display, informing each operator of the changed condition.

### Example Access Control - Aisle 3

In another example, the materials handling vehicle 408A may want to enter Aisle 3. Here, the same procedure is followed as described with reference to Example 1 and/or Example 2. Here, the same procedure is followed except that the travel path is Aisle 3 instead of Aisle 1 or Aisle 2. Also, an entry threshold of the access-controlled travel path is designated as tag 410E and/or tag 410F analogous to tag 410A and/or tag 410B associated with Aisle 1 and tag 410C and/or 410D associated with Aisle 2.

In this example, assume Aisle 3 is a double-wide lane. This provides an example to more clearly describe some optional features.

Since the materials handling vehicle 408C is already using the Aisle 3, the permission to enter Aisle 3 may be denied.

As another example, the process may implement a partial segregation of a locked access-controlled travel path to grant access where a determination is made that allowing access of the materials handling vehicle to the access-controlled travel path (despite designation of the closed state) would not violate an access rule. Here, based upon pick locations, put away locations, travel direction, task, or other available data, the server may conclude that both materials handling vehicle 408C and materials handling vehicle 408A can co-exist in Aisle 3 at the same time. Thus, the server marks Aisle 3 as being open to both materials handling vehicle 408A and materials handling vehicle 408C but may mark Aisle 3 to a closed state to all other materials handling vehicles.

In some implementations, both the materials handling vehicle 408A and materials handling vehicle 408C may operate in the normal travel mode. Since there are two vehicles in one aisle, the normal travel mode may be modified to further limit performance, e.g., to reduce top speed, to limit speed during passing maneuvers, to limit travel direction, etc. That is, a "normal" mode may be different based upon whether there is a single materials handling vehicle or multiple materials handling vehicles in an access-controlled travel path.

In other implementations, the materials handling vehicle 408A and/or the materials handling vehicle 408C may be switched to the limp travel mode or some additional mode that affects performance of the materials handling vehicle (or vehicles). As additional examples, to account for potential operation in proximity to one another, materials handling vehicle 408A and/or materials handling vehicle 408C may dynamically change modes based upon distance apart from one another, may turn on a Light Detection and Ranging (LiDAR) system or otherwise activate the LiDAR system, initiate a collision avoidance system, implement a mode designated by lane passing requirements, form direct communication, e.g., an intercom using the vehicle display, combinations thereof, etc.

Adjustment of a materials handling vehicle may also be affected by an intent to enter. For instance, assume that the materials handling vehicle 408A approaches Aisle 3 and switches to the limp travel mode to wait for an access response. The presence of the materials handling vehicle 408A may cause the materials handling vehicle 408C to change modes, enter the limp travel mode, receive a warning or message, receive a modified normal mode setting, etc. In yet other implementations, rules may be applied to determine whether to modify materials handling vehicle 408C in response to materials handling vehicle 408A. For instance, if materials handling vehicle 408C is exiting the same end where materials handling vehicle 408A intends to enter, then the materials handling vehicle 408C may be further performance modified, e.g., by modifying the normal travel mode, by changing to the limp travel mode, etc. On the other hand, if materials handling vehicle 408C is exiting the end opposite of materials handling vehicle 408A, then there may be no need to further modify the performance of materials handling vehicle 408C.

Although discussed in the context of two materials handling vehicles, the above concepts can scale to three or more vehicles. For instance, a rule may allow, two, three, or any number of materials handling vehicles in the Aisle. Here, the number of vehicles, vehicle direction, distance between vehicles, other factors, etc., can determine whether Aisle 3 is closed to an approaching materials handling vehicle.

By way of illustration, the system may allow two materials handling vehicles traveling in different directions in Aisle 3 to both be in the normal travel mode. Moreover, Aisle 3 may be marked open to an approaching materials handling vehicle. However, upon granting permission for a third materials handling vehicle to enter Aisle 3, each materials handling vehicle in Aisle 3 (or any one or more of the materials handling vehicles) may be switched to the limp travel mode or some other mode that is performance tuned down from the normal travel mode.

In some implementations, rules can be applied, e.g., based upon environmental relationships, based upon spatial relationships, based upon timing relationships, etc. For instance, if the system knows the location of two or more materials handling vehicles in an aisle, the system could allow full or higher travel speed, e.g., where the materials handling vehicles are greater than some set distance apart (partially closed aisle), traveling in different directions/on opposite sides of the aisle, etc.

### Additional Aisle Control Examples

As a few examples, regardless of whether the materials handling vehicle wants to enter Aisle 2 or Aisle 3, a partial aisle lock may be provided where the materials handling vehicles do not need to pass within a travel path, e.g., aisle. For instance, assume that the materials handling vehicle 408B is at a far end of Aisle 2 or the materials handling vehicle 408C is at a far end of Aisle 3, and the materials handling vehicle 408A only needs to enter into the opposite end, such that the materials handling vehicle 408A would not need to pass the other materials handling vehicle. The permission controller 414 may allow multiple vehicles in the same travel path. Moreover, as noted in greater detail herein, if the process knows the location of both materials handling vehicles in an aisle, the process could allow full or higher travel speed where the materials handling vehicles are greater than some set distance apart (e.g., in a partially closed aisle example).

For instance, assume that the materials handling vehicle 408B enters Aisle 2 from the end opposite end from Lane 1, and further assume that the materials handling vehicle 408B exits Aisle 2 from the same opposite end from Lane 1. Likewise, assume materials handling vehicle 408A enters Aisle 2 from the end adjacent to Lane 1 and exits Aisle 2 from the same end adjacent to Lane 1. Further, assume there is no need for materials handling vehicle 408A to pass the materials handling vehicle 408B. Here, the server may decide to enable the open state for both the materials handling vehicle 408A and 408B at the same time, but set Aisle 2 to a closed state (locked) for all other materials handling vehicles.

As another example, if a materials handling vehicle is at a far end of an aisle, it may be desirable to allow a later arriving materials handling vehicle to also enter the same aisle for a pick (or put away) near the entrance where the second arriving materials handling vehicle will vacate before the original materials handling vehicle gets down the aisle, e.g., to avoid congestion at an end of aisle.

As another example, since Aisle 3 is double wide, if the materials handling vehicle 408C is adjacent to Rack 2 and is picking from Rack 2 and the materials handling vehicle 408A is tasked to pick from (or put away to) Rack 3, then both vehicles may be allowed into Aisle 3. Here, separate control can be implemented to facilitate aisle passing maneuvers if necessary.

### Access Control Process Example

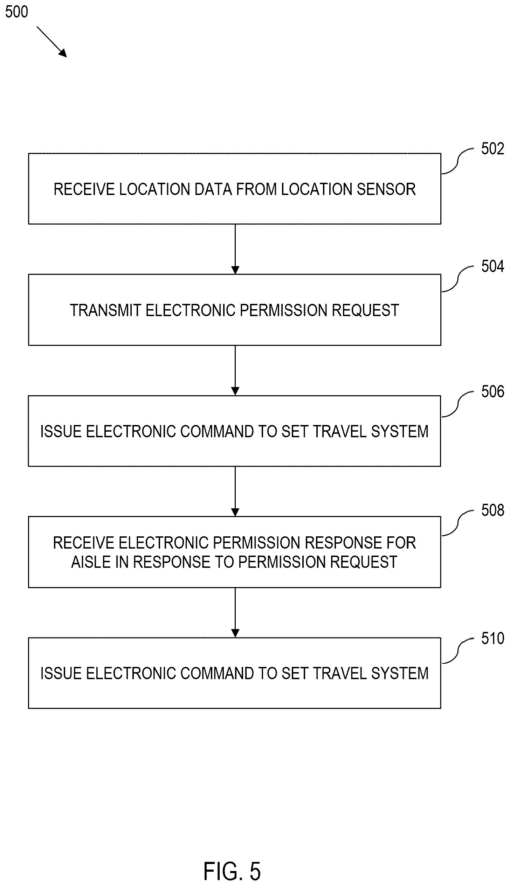

Referring to FIG. 5, a process 500 is illustrated, for access control of locations in an industrial environment. In this example, an access-controlled travel path is an aisle. The process 500 can be implemented by incorporating or otherwise using any combination of hardware devices and/or processes/functionality described in any of the preceding FIGURES, in any combination except where expressly stated. The process 500 can also utilize features as described with reference to subsequent FIGURES.

The process 500 comprises receiving at 502, location data from a location sensor that is coupled to the materials handling vehicle, e.g., by receiving location data from a radio frequency identification tag via a radio frequency identification transceiver, or via any other technique describe previously. The materials handling vehicle includes a travel system that comprises modes, e.g., a normal travel mode, a limp travel mode, a restricted travel mode, or combinations thereof as described more fully herein.

The process 500 also comprises transmitting at 504, e.g., via a transceiver, an electronic permission request to access an aisle when the received location data indicates proximity to an aisle threshold of the aisle.

The process 500 further comprises issuing at 506, an electronic command to set the travel system of the materials handling vehicle to the limp travel mode as the materials handling vehicle engages the aisle threshold, e.g., by restricting a forward travel distance of the materials handling vehicle into the aisle to a predetermined distance beyond the aisle threshold (e.g., 20 feet or approximately just over 6 meters) and limiting a travel direction of the materials handling vehicle to a reverse travel direction that exits the aisle.

The process 500 also comprises receiving at 508, e.g., via the transceiver, an electronic permission response for the aisle in response to the electronic permission request, the electronic permission response comprising a determination of whether the aisle is in a closed state.

The process 500 yet further performs issuing at 510, an electronic command to set the travel system of the materials handling vehicle to the restricted travel mode when the aisle is in the closed state, and otherwise issuing an electronic command to set the travel system of the materials handling vehicle to the normal travel mode.

Also, in some implementations, the process 500 also performs transmitting an exit signal when the materials handling vehicle has occupied the aisle and has traveled back over the aisle threshold. In this manner the exit signal can serve as an electronic prompt that triggers the system to unlock the aisle.

Further, in some implementations, the process 500 also performs receiving operator logon information that identifies an operator of the materials handling vehicle and transmitting the operator logon information with the electronic permission request to access the aisle. Here, receiving the electronic permission response further comprises receiving an electronic permission response that is based on the operator logon information.

Additionally, the process 500 can additionally perform receiving an override command from an operator of the materials handling vehicle to alter the state of the aisle and transmitting the override command.

Likewise, the process 500 can additionally perform transmitting, upon entry of the materials handling vehicle into the aisle, an electronic command to toggle a visual indicator disposed proximally to the aisle threshold to a closed configuration.

Also, the process 500 can additionally perform transmitting, upon exit of the materials handling vehicle from the aisle, an electronic command to toggle a visual indicator disposed proximally to the aisle threshold to an open configuration.

### Access Control System Example

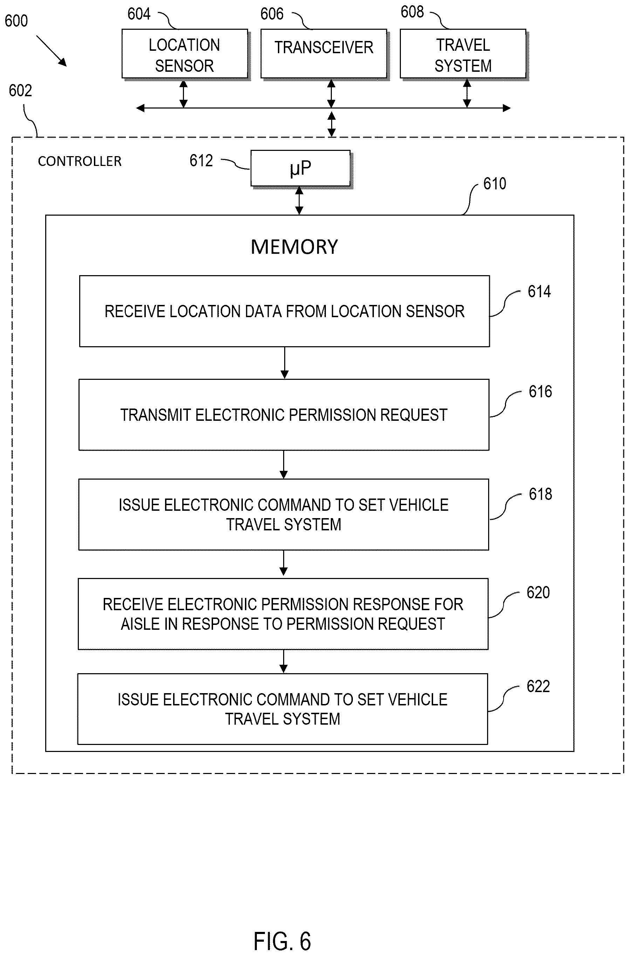

Referring to FIG. 6, a system 600 is illustrated, for access control of locations in an industrial environment. More particularly, the system 600 is operatively configured for accessing a control location such as an aisle by a materials handling vehicle. The system 600 can be implemented by incorporating or otherwise using any combination of hardware devices and/or processes/functionality described in any of the preceding FIGURES, in any combination except where expressly stated. The system 600 can also utilize features as described with reference to subsequent FIGURES.

The system 600 comprises a controller 602 for a materials handling vehicle, e.g., analogous to the processing device 102, FIG. 1B, or the information linking device 202, FIG. 2.

The controller 602 is communicably coupled to a location sensor 604 that collects location data, e.g., analogous to the localized communication device 126,

FIG. 1B, location tracking system 138, FIG. 1B, a sensor 214, or a sensor that is part of the environmental-based location tracking of FIG. 2.

The controller 602 is also communicably coupled to a wireless transceiver 606, e.g., analogous to the transceiver 134, FIG. 1B, transceiver 204, FIG. 2, etc.

Additionally, the controller 602 is communicably coupled to a travel system 608, e.g., analogous to the travel system 132, FIG. 1B, travel system, FIG. 2.

Still further, the controller 602 includes a memory device 610 storing executable instructions and includes a processor 612 communicably coupled to the memory device 610. The processor 612 is also communicably coupled to the wireless transceiver 606.

The processor 612, when executing the executable instructions read out from the memory device 610, receives at 614, location data from the location sensor 604, e.g., from a radio frequency identification tag via a radio frequency identification transceiver.

The processor 612, when executing the executable instructions read out from the memory device 610, transmits at 616, an electronic permission request to access an access-controlled travel path when the received location data indicates proximity to an entry threshold of the access-controlled travel path. For instance, the entry threshold can be implemented analogous to the entry threshold 142, FIG. 1B, or the entry threshold described with reference to FIG. 3.

The processor 612, when executing the executable instructions read out from the memory device 610 issues at 618, an electronic command to set the travel system of the materials handling vehicle to the limp travel mode as the materials handling vehicle engages the entry threshold. This may be implemented in a manner analogous to that described with reference to FIG. 1B, in a manner analogous to the electronic command issued at 306, FIG. 3 and/or the electronic command issued at 506, FIG. 5, etc.

The processor 612, when executing the executable instructions read out from the memory device 610, receives at 620, an electronic permission response for the access-controlled travel path in response to the electronic permission request, the electronic permission response comprising a determination of whether the access-controlled travel path is in a closed state. This can be implemented in a manner analogous to that described, for instance, with reference to the electronic permission response of FIG. 1B, or the permission response received at 308, FIG. 3; the electronic permission response received at 508, FIG. 5, etc.

Further, the processor 612, when executing the executable instructions read out from the memory device 610, issues at 622, an electronic command to set the travel system of the materials handling vehicle to the restricted travel mode when the access-controlled travel path is in the closed state, otherwise issuing an electronic command to set the travel system of the materials handling vehicle to the normal travel mode. This can be implemented in a manner analogous to that described, for instance, with reference to the electronic command issued in FIG. 1B, or the electronic command at 310, FIG. 3; the electronic command issued at 510, FIG. 5, etc.

In some implementations, the limp travel mode restricts a forward travel distance of the materials handling vehicle to a predetermined distance beyond the access-controlled travel path threshold and limits a travel direction of the materials handling vehicle to a reverse travel direction.

In some implementations, the processor 612 transmits an exit signal when the materials handling vehicle has occupied the access-controlled travel path and travels back over the access-controlled travel path threshold.

Moreover, in some implementations, the processor 612 receives operator logon information that identifies an operator of a materials handling vehicle (where the operator logon information comprises a modifiable permission parameter) and transmits the operator logon information with the electronic permission request to access the access-controlled travel path via the transceiver. In this configuration, the electronic permission response is further based on the operator logon information.

Still further, in some implementations, the processor 612 receives an override command from an operator of the materials handling vehicle to alter the state of the access-controlled travel path and transmits the override command via the transceiver.

In some implementations, the processor 612 transmits via the transceiver, upon entry of the materials handling vehicle into the access-controlled travel path, an electronic command to toggle visual indicators that are disposed proximally to the access-controlled travel path threshold to a closed configuration.

In some implementations, the processor 612 transmits, upon exit of the materials handling vehicle from the access-controlled travel path, an electronic command to toggle visual indicators that are disposed proximally to the access-controlled travel path threshold to an open configuration.

### Server-Centric Process

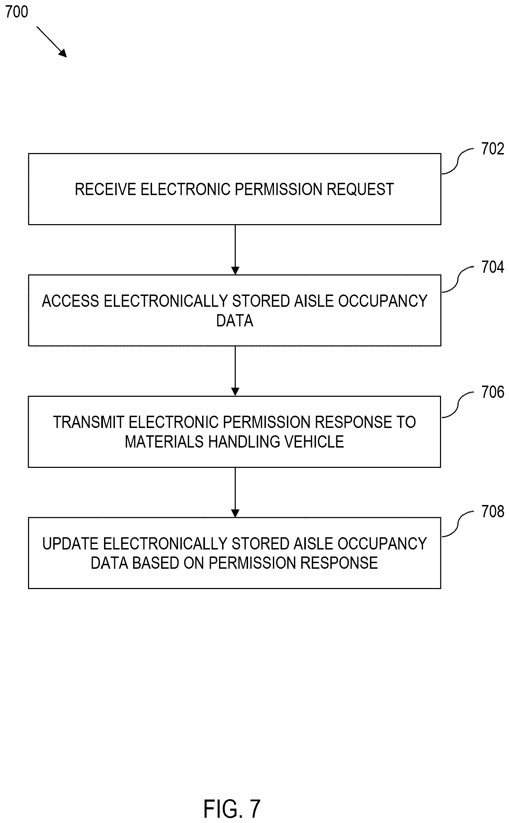

Referring to FIG. 7, a process 700 is illustrated, for access control of locations in an industrial environment. More particularly, the process 700 is operatively configured for accessing a control location such as an aisle by a materials handling vehicle. The process 700 can be implemented by incorporating or otherwise using any combination of hardware devices and/or processes/functionality described in any of the preceding FIGURES, in any combination except where expressly stated. The process 700 can also utilize features as described with reference to subsequent FIGURES.

The process 700 for controlling aisle access in an industrial environment comprises receiving, at 702, at a remote server, an electronic permission request for a materials handling vehicle to access an aisle within an industrial environment.

The process 700 also comprises accessing, at 704, electronically stored aisle occupancy data to determine a state of the aisle, wherein the state of the aisle comprises an open state and a closed state.

The process 700, still further comprises transmitting, at 706, an electronic permission response to the materials handling vehicle, the electronic permission response comprising an electronic command to modify travel parameters of the materials handling vehicle based on the determined state of the aisle.

Moreover, the process 700 comprises updating, at 708, the electronically stored aisle occupancy data based on the electronic permission response.

In some implementations, the process 700 further comprises transmitting an electronic command to modify travel parameters of the materials handling vehicle by transmitting an electronic command that restricts a forward travel distance of the materials handling vehicle to a predetermined distance beyond an aisle threshold and transmitting an electronic command that limits a travel direction of the materials handling vehicle to a reverse travel direction when the materials handling vehicle reaches the predetermined distance beyond an aisle threshold.

In yet some further implementations, the process 700 can further comprise transmitting an electronic command that removes the forward travel distance restriction and the travel direction limitation of the materials handling vehicle upon determination that the aisle is in the open state.

Still further, in some implementations, the process 700 further comprises receiving an exit signal when the materials handling vehicle that is occupying the aisle travels over an aisle threshold and modifying the electronically stored aisle occupancy data in response to the exit signal by changing the state of the aisle from a close state to an open state.

Also, in some implementations, receiving, by the remote server, the electronic permission request for a materials handling vehicle to access an aisle within an industrial environment comprises receiving operator logon information that identifies an operator of a materials handling vehicle, wherein the operator logon information comprises a permission parameter. Likewise, accessing electronically stored aisle permission data comprises accessing electronically stored aisle occupancy data to determine whether the operator of the materials handling vehicle is permitted in the aisle based on the permission parameter. Here, the process 700 further comprises determining whether the operator of a materials handling vehicle has permission to access the aisle based on the permission parameter.

In yet some other implementations, the process 700 further comprises receiving an override command from an operator of the materials handling vehicle to alter the state of the aisle, and modifying the electronically stored aisle occupancy data in response to the override command.

In yet a further example, the process 700 can further comprise transmitting, upon entry of the materials handling vehicle into the aisle, an electronic command to toggle visual indicators that are disposed proximally to the aisle threshold to a closed configuration.

In still a further example, the process 700 can further comprise transmitting, upon exit of the materials handling vehicle from the aisle, an electronic command to toggle visual indicators that are disposed proximally to the aisle threshold to an open configuration.

### Prioritization Example

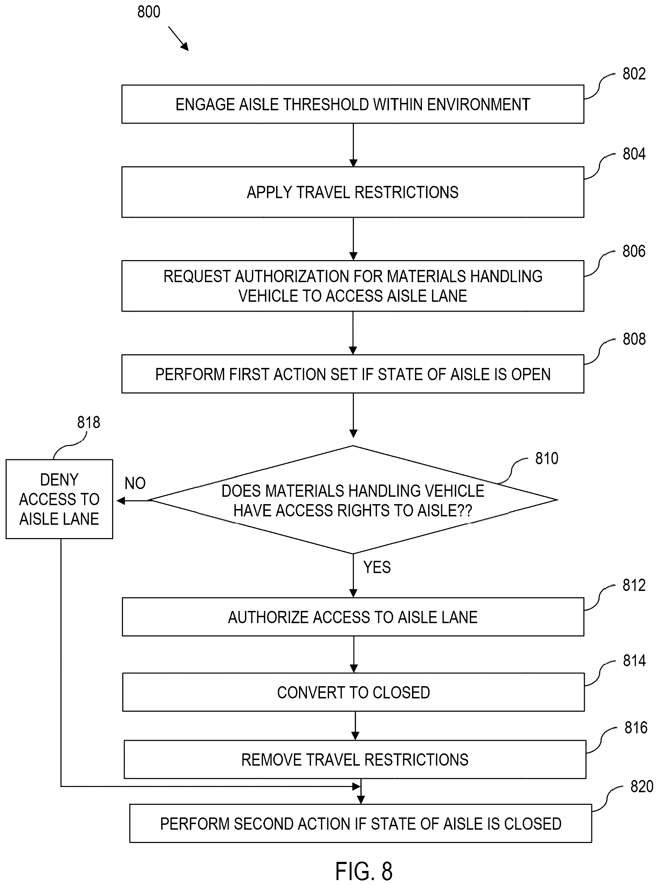

Referring to FIG. 8, a process 800 is illustrated, for access control of locations in an industrial environment. More particularly, the process 800 is operatively configured for accessing a control location such as an aisle by a materials handling vehicle. The process 800 can be implemented by incorporating or otherwise using any combination of hardware devices and/or processes/functionality described in any of the preceding FIGURES, in any combination except where expressly stated. The process 800 can also utilize features as described with reference to subsequent FIGURES.

The process 800 comprises engaging at 802, by an materials handling vehicle, an aisle threshold within an environment, wherein the aisle threshold precedes an aisle lane.

The process 800 also comprises applying at 804, automatically by engaging the aisle threshold, travel restrictions to the materials handling vehicle as the materials handling vehicle travels into the aisle lane.

Also, the process 800 comprises requesting at 806, automatically by engaging the aisle threshold, authorization for the materials handling vehicle to access the aisle lane by interrogating a server via a communications device on the materials handling vehicle, to verify a state of the aisle, wherein the state of the aisle comprises an open state and a closed state.

The process 800 further comprises performing at 808, a first action set if the state of the aisle is open. The first action set comprises determining at 810, whether the materials handling vehicle has access rights to the aisle lane. The process 800 performs authorizing at 812, the materials handling vehicle to access the aisle lane if materials handling vehicle has access rights to the aisle. Here, authorization comprises converting at 814, the state of the aisle to closed, and removing at 816, the travel restrictions on the materials handling vehicle.

The process 800 comprises denying at 818, the materials handling vehicle access to the aisle lane if materials handling vehicle does not have access rights to the aisle lane. Moreover, the process 800 comprises performing at 820, a second action if the state of the aisle is closed, the second action comprising maintaining the travel restrictions to the materials handling vehicle while the materials handling vehicle is within the aisle lane.

In some implementations, denying at 818, the materials handling vehicle access to the aisle lane, comprises maintaining the travel restrictions to the materials handling vehicle while the materials handling vehicle is within the aisle lane.

In some implementations, applying at 804, automatically by engaging the aisle threshold, travel restrictions comprises limiting the materials handling vehicle to at least one of a fixed travel distance in the aisle lane, a fixed top speed in the aisle lane, and a reverse travel direction in the aisle lane.

In some implementations, performing a first action set if the state of the aisle is open further comprises determining whether an operator of the materials handling vehicle has access rights to the aisle lane.

In some implementations, authorizing at 812, the materials handling vehicle to access the aisle lane if materials handling vehicle has access rights to the aisle further comprises converting the status of the aisle to open when the authorized materials handling vehicle exits the aisle lane.

Moreover, in some implementations, the process 800 further comprises displaying, at a user interface, information related to a status of an aisle within an environment, wherein the status of the aisle comprises an open status and a closed status, receiving a reservation request where the aisle status is open, and electronically identifying the aisle as having the closed status during a time associated with the reservation.

### Computing Example

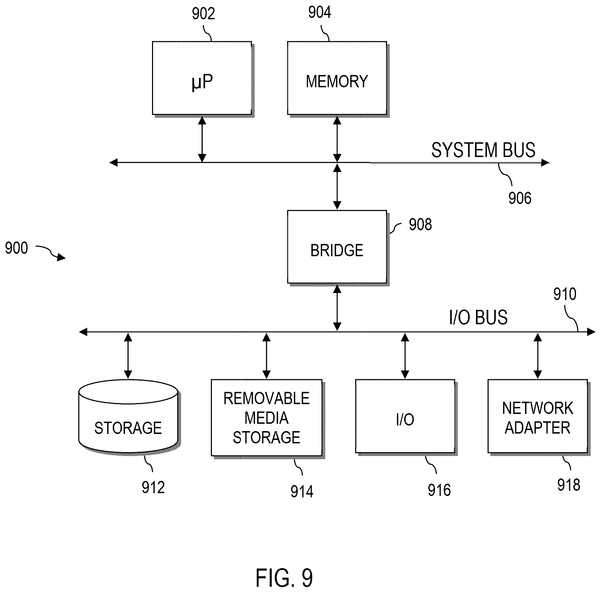

Referring to Fig. 9, a block diagram of a data processing system is depicted in accordance with the present disclosure. Data processing system 900 includes one or more processors 902 connected to memory 904 across a system bus 906. A bus bridge 908 is connected to the system bus 906 and provides an interface to any number of peripherals, e.g., via an I/O bus 910. Example peripherals include storage 912 (e.g., hard drives), removable media storage 914 (e.g., tape drives, CD-ROM drives, FLASH drives, etc.), I/O 916 (e.g., keyboard, mouse, monitor, etc.), a network adapter 918 or combinations thereof.

The memory 904, storage 912, removable media storage 914 or combinations thereof can be used to implement a computer usable storage medium having computer usable program code embodied thereon. The computer usable program code is read out and processed to implement any aspect of the present disclosure, for example, to implement any aspect of any of the methods and/or system components illustrated in the preceding FIGURES.

### Miscellaneous

The approaches herein provide a solution to industrial problems including congestion, navigation, and travel control, by providing a flexible and extensible system that does not rely upon basic geofencing systems that apply rigid rules to control access to geo-locations.

In this regard, this system is not a simple geofencing system implementing boundary restrictions as the response to the various modes (e.g., the normal travel mode, the limp travel mode, and the restricted travel mode) are highly customizable and dynamic. Moreover, the base rules can be overridden by the remote server in some instances. Also, the base rules may be overridden by the operator, materials handling vehicle, task priority, etc., in additional examples. For instance, in some implementations, a materials handling vehicle operator can override a decision either granting permission to enter, or refusing a right of entry. For instance, an operator may tolerate the limp travel mode to get access into an aisle, e.g., where a pick or put away is close to an aisle end. An operator may also notice that an aisle is locked (closed state) but visual inspection may reveal no materials handling vehicle in the aisle. Here, the operator may be able to query/verify why the travel path is in a closed state. In some implementations, e.g., where the server record indicates a materials handling vehicle to be the reason for the lock, the server or other means may verify the location of the other materials handling vehicle that caused the lock. If that materials handling vehicle is verified to be out of the travel path, the server can unlock the travel path.

Moreover, as seen in the examples, a materials handling vehicle can be granted access, then requested to vacate. Likewise, a materials handling vehicle can be initially denied access but subsequently allowed access, etc.

As will be appreciated by one skilled in the art, aspects of the present disclosure may be embodied as a system, method or computer program product. Furthermore, aspects of the present disclosure may take the form of a computer program product embodied in one or more computer readable storage medium(s) having computer readable program code embodied thereon.

The flowchart and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). In some alternative implementations, the functions noted in the block may occur out of the order noted in the figures.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed.

### Clauses:

Further expressions of the inventive concept are set out in the following clauses:
Clause group P (Process clauses):
P1. A process for access control of locations in an industrial environment, the process comprising: receiving location data from a location sensor that is coupled to a materials handling vehicle, the materials handling vehicle having a travel system that comprises a normal travel mode, a limp travel mode, and a restricted travel mode; transmitting, via a transceiver, an electronic permission request to access an aisle when the received location data indicates proximity to an aisle threshold of the aisle;
issuing an electronic command to set the travel system of the materials handling vehicle to the limp travel mode as the materials handling vehicle engages the aisle threshold; receiving, via the transceiver, an electronic permission response for the aisle in response to the electronic permission request, the electronic permission response comprising a determination of whether the aisle is in a closed state; and issuing an electronic command to set the travel system of the materials handling vehicle to the restricted travel mode when the aisle is in the closed state, otherwise issuing an electronic command to set the travel system of the materials handling vehicle to the normal travel mode.
P2. The process of Clause P1, wherein issuing an electronic command to set the travel system of the materials handling vehicle to the limp travel mode as the materials handling vehicle engages the aisle threshold comprises: restricting a forward travel distance of the materials handling vehicle into the aisle, to a predetermined distance beyond the aisle threshold; and limiting a travel direction of the materials handling vehicle to a reverse travel direction that exits the aisle.
P3. The process according to any combination of preceding clauses further comprising transmitting an exit signal when the materials handling vehicle has occupied the aisle and has traveled back over the aisle threshold.
P4. The process according to any combination of preceding clauses, wherein receiving location data from a location sensor that is coupled to a materials handling vehicle comprises receiving location data from a radio frequency identification tag via a radio frequency identification transceiver.
P5. The process according to any combination of preceding clauses further comprising receiving operator logon information that identifies an operator of the materials handling vehicle; and transmitting the operator logon information with the electronic permission request to access the aisle; wherein: receiving the electronic permission response further comprises receiving an electronic permission response that is based on the operator logon information.
P6. The process according to any combination of preceding clauses further comprising: receiving an override command from an operator of the materials handling vehicle to alter the state of the aisle; and transmitting the override command.
P7. The process according to any combination of preceding clauses further comprising: transmitting, upon entry of the materials handling vehicle into the aisle, an electronic command to toggle a visual indicator disposed proximally to the aisle threshold to a closed configuration.
P8. The process according to any combination of preceding clauses further comprising: transmitting, upon exit of the materials handling vehicle from the aisle, an electronic command to toggle a visual indicator disposed proximally to the aisle threshold to an open configuration.
P9. A process for controlling aisle access in an industrial environment, the process comprising: receiving, at a remote server, an electronic permission request for a materials handling vehicle to access an aisle within an industrial environment; accessing electronically stored aisle occupancy data to determine a state of the aisle, wherein the state of the aisle comprises a select one of an open state and a closed state; transmitting an electronic permission response to the materials handling vehicle, the electronic permission response comprising an electronic command to modify travel parameters of the materials handling vehicle based on the determined state of the aisle; and updating the electronically stored aisle occupancy data based on the electronic permission response.
P10. The process of Clause P9 further comprising transmitting an electronic command to modify travel parameters of the materials handling vehicle by: transmitting an electronic command that restricts a forward travel distance of the materials handling vehicle to a predetermined distance beyond an aisle threshold; and transmitting an electronic command that limits a travel direction of the materials handling vehicle to a reverse travel direction when the materials handling vehicle reaches the predetermined distance beyond the aisle threshold.
P11. The process of Clause P10 further comprising: transmitting an electronic command that removes the forward travel distance restriction and the travel direction limitation of the materials handling vehicle upon determination that the aisle is in the open state.
P12. The process according to any combination of preceding Clauses P9-P11 further comprising: receiving an exit signal when the materials handling vehicle that is occupying the aisle travels over an aisle threshold; and modifying the electronically stored aisle occupancy data in response to the exit signal by changing the state of the aisle from a close state to an open state.
P13. The process according to any combination of preceding Clauses P9-P121, wherein: receiving, at the remote server, the electronic permission request for a materials handling vehicle to access an aisle within an industrial environment comprises receiving operator logon information that identifies an operator of a materials handling vehicle, wherein the operator logon information comprises a permission parameter; accessing electronically stored aisle occupancy data comprises accessing electronically stored aisle occupancy data to determine whether the operator of the materials handling vehicle is permitted in the aisle based on the permission parameter; and further comprising: determining whether the operator of a materials handling vehicle has permission to access the aisle based on the permission parameter.
P14. The process according to any combination of preceding Clauses P9-P13 further comprising: receiving an override command from an operator of the materials handling vehicle to alter the state of the aisle; and modifying the electronically stored aisle occupancy data in response to the override command.
P15. The process according to any combination of preceding Clauses P9-P14 further comprising: transmitting, upon entry of the materials handling vehicle into the aisle, an electronic command to toggle visual indicators that are disposed proximally to the aisle threshold, to a closed configuration.
P16. The process according to any combination of preceding Clauses P9-P15 further comprising: transmitting, upon exit of the materials handling vehicle from the aisle, an electronic command to toggle visual indicators that are disposed proximally to the aisle threshold to an open configuration.
P17. A process for materials handling vehicles, the process comprising: engaging, by a materials handling vehicle, an aisle threshold within an environment, wherein the aisle threshold precedes an aisle lane; applying, automatically by engaging the aisle threshold, travel restrictions to the materials handling vehicle as the materials handling vehicle travels into the aisle lane; requesting, automatically by engaging the aisle threshold, authorization for the materials handling vehicle to access the aisle lane by interrogating a server via a communications device on the materials handling vehicle, to verify a state of the aisle, wherein the state of the aisle comprises an open state or a closed state; performing a first action set if the state of the aisle is open, the first action set comprising: determining whether the materials handling vehicle has access rights to the aisle lane; authorizing the materials handling vehicle to access the aisle lane if the materials handling vehicle has access rights to the aisle, wherein authorization comprises: converting the state of the aisle to closed to other vehicles; and removing the travel restrictions on the materials handling vehicle; and denying the materials handling vehicle access to the aisle lane if the materials handling vehicle does not have access rights to the aisle lane; and performing a second action if the state of the aisle is closed, the second action comprising maintaining the travel restrictions to the materials handling vehicle while the materials handling vehicle is within the aisle lane.
P18. The process of Clause P17, wherein denying the materials handling vehicle access to the aisle comprises maintaining the travel restrictions to the materials handling vehicle while the materials handling vehicle is within the aisle lane.
P19. The process according to any combination of preceding Clauses P17-P18, wherein applying, automatically by engaging the aisle threshold, travel restrictions to the materials handling vehicle comprises limiting the materials handling vehicle to at least one of a fixed travel distance in the aisle lane, a fixed top speed in the aisle lane, or a reverse travel direction in the aisle lane.
P20. The process according to any combination of preceding Clauses P17-P19, wherein performing a first action set if the state of the aisle is open further comprises determining whether an operator of the materials handling vehicle has access rights to the aisle lane.
P21. The process according to any combination of preceding Clauses P17-P20, wherein authorizing the materials handling vehicle to access the aisle lane if the materials handling vehicle has access rights to the aisle further comprises converting the status of the aisle to open when the authorized materials handling vehicle exits the aisle lane.
P22. The process according to any combination of preceding Clauses P17-P21 further comprising: displaying, at a user interface, information related to a status of an aisle within an environment, wherein the status of the aisle comprises a select one of an open state and a closed state; receiving a reservation request where the aisle status is open; and electronically identifying the aisle as having the closed status during a time associated with the reservation.
P23. A process for access control in an industrial environment, the process comprising: receiving an electronic message that indicates that a materials handling vehicle is approaching an access-controlled travel path; generating an electronic permission request to enter the access-controlled travel path responsive to the received electronic message; receiving, via a transceiver of the materials handling vehicle, an electronic permission response, wherein the electronic permission response is received responsive to the generated electronic permission request, the electronic permission response comprising a determination of whether the access-controlled travel path is in an open state or a closed state; and issuing a first electronic command to the materials handling vehicle when the access-controlled travel path is in the closed state, and issuing a second electronic command to the materials handling vehicle where the access-controlled travel path is in the open state.
P24. The process of Clause P23, wherein receiving an electronic message that indicates that a materials handling vehicle is approaching an access-controlled travel path comprises detecting that the materials handling vehicle has engaged an entry threshold of the access-controlled travel path.
P25. The process according to any combination of preceding Clauses P23-P24 further comprising: issuing an electronic command to set a travel system of the materials handling vehicle to a limp travel mode that restricts at least one travel feature of the materials handling vehicle when the materials handling vehicle has engaged an entry threshold of the access-controlled travel path.
P26. The process according to any combination of preceding Clauses P23-P25 further comprising: issuing an electronic command to set a travel system of the materials handling vehicle to a restricted travel mode where the access-controlled travel path is in the closed state.
P27. The process according to any combination of preceding Clauses P23-P26 further comprising: issuing an electronic command to set a travel system of the materials handling vehicle to a normal travel mode where the access-controlled travel path is in the open state.
P28. The process according to any combination of preceding Clauses P23-P27 further comprising: allowing the materials handling vehicle to enter the access-controlled travel path, and setting the state of the access-controlled travel path to closed for other materials handling vehicles.

**Reference Number Chart:**

| **Reference Number** | **Part Name** |
|---|---|
| 100 | industrial environment |
| 102 | processing device |
| 104 | network |
| 106 | network component |
| 108 | materials handling vehicle |
| 110 | access point |
| 112 | server |
| 114 | platform |
| 115 | permission controller |
| 116 | data sources |
| 118 | materials handling vehicle information data source |
| 120 | management system data source |
| 122 | other data source(s) |
| 124 | geo-location system |
| 126 | localized communication device (location sensor) |
| 128 | anchor (entry tag) |
| 130 | access-controlled travel path |
| 132 | travel system |
| 134 | transceiver |
| 136 | display |
| 138 | Location tracking system |
| 140 | local control device |
| 142 | entry threshold |
| 144 | visual indicator |
| 200 | control system |
| 202 | information linking device |
| 204 | transceiver |
| 206 | control module |
| 208 | power enabling circuitry |
| 210 | power line |
| 212 | i/o module |
| 214 | sensor(s) |
| 216 | third party device |
| 218 | vehicle network |
| 220 | native vehicle electronic components |
| 222 | environmental-based location tracking device |
| 224 | vehicle display |
| 300 | process (for access control) |
| 302 | receiving an electronic message |
| 304 | generating an electronic permission request |
| 306 | issuing an electronic command |
| 308 | receiving an electronic permission response |
| 310 | issuing an electronic command |
| 400 | environment |
| 402A | aisle (also designated as aisle 1) |
| 402B | aisle (also designated as aisle 2) |
| 402C | aisle (also designated as aisle 3) |
| 404A | rack |
| 404B | rack |
| 404C | rack |
| 406A | first travel lane |
| 406B | second travel lane |
| 408A | materials handling vehicle |
| 408B | materials handling vehicle |
| 408C | materials handling vehicle |
| 410A | tag |
| 410B | tag |
| 410C | tag |
| 410D | tag |
| 410E | tag |
| 410F | tag |
| 412 | remote server |
| 414 | platform |
| 420 | display |
| 500 | process (for access control) |
| 502 | receiving location data |
| 504 | transmitting an electronic permission request |
| 506 | issuing an electronic command |
| 508 | receiving an electronic permission response |
| 510 | issuing an electronic command |
| 600 | system |
| 602 | controller |
| 604 | location sensor |
| 606 | wireless transceiver |
| 608 | travel system |
| 610 | memory device |
| 612 | processor |
| 614 | receives location data |
| 616 | transmits an electronic permission request |
| 618 | issues an electronic command |
| 620 | receives an electronic permission response |
| 622 | issues an electronic command |
| 700 | process |
| 702 | receiving an electronic permission request |
| 704 | accessing electronically stored aisle occupancy data |
| 706 | transmitting an electronic permission response |
| 708 | updating the electronically stored aisle occupancy data |
| 800 | process (for access control) |
| 802 | engaging by an materials handling vehicle, an aisle threshold |
| 804 | applying automatically by engaging the aisle threshold, travel restrictions |
| 806 | requesting automatically by engaging the aisle threshold, authorization |
| 808 | performing a first action set if the state of the aisle is open |
| 810 | determining whether the materials handling vehicle has access rights |
| 812 | authorizing the materials handling vehicle to access the aisle lane |
| 814 | converting the state of the aisle to closed |
| 816 | removing the travel restrictions |
| 818 | denying the materials handling vehicle access to the aisle lane |
| 820 | performing a second action if the state of the aisle is closed |
| 900 | data processing system |
| 902 | one or more processors |
| 904 | memory |
| 906 | system bus |
| 908 | bus bridge |
| 910 | i/o bus |
| 912 | storage |
| 914 | removable media storage |
| 916 | i/o |
| 918 | network adapter |

## Claims

1. A process (300) for access control in an industrial environment, the process comprising:
receiving (302) an electronic message that indicates that a materials handling vehicle (108) is approaching an access-controlled travel path (130), the materials handling vehicle (108) having a travel system (132) that comprises a normal travel mode, a limp travel mode, and a restricted travel mode;
generating (304) an electronic permission request to enter the access-controlled travel path (130) responsive to the received electronic message;
issuing (306) an electronic command to set the travel system (132) of the materials handling vehicle (108) to the limp travel mode as the materials handling vehicle (108) engages an entry threshold (142) of the access-controlled travel path (130);
receiving (308) an electronic permission response, wherein the electronic permission response is received responsive to the generated electronic permission request, the electronic permission response indicating whether the access-controlled travel path (130) is in an open state or a closed state; and
issuing (310) an electronic command to set the travel system (132) of the materials handling vehicle (108) to the restricted travel mode when the access-controlled travel path (130) is in the closed state, and issuing an electronic command to set the travel system (132) of the materials handling vehicle (108) to the normal travel mode when the access-controlled travel path (130) is in the open state.

2. The process of claim 1, wherein receiving the electronic message further comprises:
receiving the electronic message responsive to receiving by a processing device on the materials handling vehicle (108), data from at least one of:
a location sensor (126, 214, 220)) that is coupled to the materials handling vehicle (108);
a location tracking system (138, 222) on the materials handling vehicle; or
a radio frequency identification tag (128) via a radio frequency identification transceiver (126, 220);
the data indicating that the materials handling vehicle is approaching the access-controlled travel path.

3. The process of claim 1 or claim 2, wherein:
issuing the electronic command to set the travel system of the materials handling vehicle to the limp travel mode as the materials handling vehicle engages the entry threshold of the access-controlled travel path comprises:
restricting a forward travel distance of the materials handling vehicle into the access-controlled travel path, to a predetermined distance beyond the entry threshold; and
limiting thereafter, a travel direction of the materials handling vehicle to a reverse travel direction that exits the access-controlled travel path.

4. The process of claim 3 further comprising:
engaging a timer that sets a limited amount of wait time that the materials handling vehicle can remain in the limp travel mode, to provide an opportunity for the access-controlled travel path to clear to the open state before issuing a command for the travel system to implement the restricted travel mode.

5. The process of any combination of preceding claims further comprising:
performing, responsive to the generated electronic permission request, a verification that at least one other materials handling vehicle is within the access-controlled travel path before issuing the electronic command to set the travel system of the materials handling vehicle to the restricted travel mode; or
performing, responsive to the generated electronic permission request, a verification that the access-controlled travel path is at least one of:
currently being used by a resource before issuing the electronic command to set the travel system of the materials handling vehicle to the restricted travel mode; and
currently designated as reserved by a resource before issuing the electronic command to set the travel system of the materials handling vehicle to the restricted travel mode.

6. The process of any combination of preceding claims further comprising:
implementing a resource allocation scheme that performs at least one of:
sets a location access time limit for materials handling vehicles to remain in the access-controlled travel path, whereupon a resource within the access-controlled travel path that exceeds its location access time limit is automatically required to exit the access-controlled travel path; and
sets a priority for materials handling vehicles to remain in the access-controlled travel path, whereupon a resource within the access-controlled travel path with a lower priority than an approaching resource with a higher priority is automatically required to exit the access-controlled travel path.

7. The process of any combination of preceding claims further comprising:
implementing a partial segregation of a locked access-controlled travel path to grant access where a determination is made that allowing access of the materials handling vehicle to the access-controlled travel path, despite designation of the closed state, would not violate an access rule.

8. The process of any combination of preceding claims further comprising:
utilizing a display (136, 224) on the materials handling vehicle as a locked access interface to graphically display an indication of at least one locked access-controlled travel path, a time each displayed access-controlled travel path has been locked, a prediction of how long each displayed access-controlled travel path will be locked, or a combination thereof; or
utilizing the display on the materials handling vehicle to form an intercom for communication with another materials handling vehicle within the access-controlled travel path that has the access-controlled travel path locked to the closed state; or
utilizing the display on the materials handling vehicle to enable an operator of the materials handling vehicle to define at least one parameter defining a lock placed on the access-controlled travel path, the at least one parameter defining a start time of desired restricted access, a duration of restricted access, a size of a restricted access area within the access-controlled travel path, or combinations thereof; or
displaying, at a user interface, information related to a status of an access-controlled travel path within an environment, wherein the status of the access-controlled travel path comprises a select one of an open state and a closed state, further comprising:
receiving a reservation request where the access-controlled travel path status is open; and
electronically identifying the access-controlled travel path as having the closed status during a time associated with the reservation.

9. The process of any combination of preceding claims further comprising at least one of:
automatically unlocking the access-controlled travel path and transitioning the access-controlled travel path to an open state by exiting the access-controlled travel path; or
transmitting an exit signal when the materials handling vehicle has:
occupied the access-controlled travel path; and
has traveled back over the entry threshold so as to exit the access-controlled travel path.

10. The process of any combination of preceding claims further comprising:
receiving operator logon information that identifies an operator of the materials handling vehicle; and
transmitting the operator logon information with the electronic permission request to access the access-controlled travel path; and
wherein:
receiving the electronic permission response further comprises receiving an electronic permission response that is based on the operator logon information.

11. The process of any combination of preceding claims further comprising:
receiving an override command from an operator of the materials handling vehicle to alter the state of the access-controlled travel path; and
transmitting the override command.

12. The process of any combination of preceding claims further comprising:
transmitting, upon entry of the materials handling vehicle into the access-controlled travel path, an electronic command to toggle a visual indicator (144) disposed proximally to the entry threshold, to cause the visual indicator to visually represent the closed state; and
transmitting, upon exit of the materials handling vehicle from the access-controlled travel path, an electronic command to toggle the visual indicator to cause the visual indicator to visually represent the open state.

13. An access control system, comprising:
a processing device (102) on a materials handling vehicle (108);
a travel system (132) that affects at least one travel related performance parameter and/or at least one power related performance parameter of the materials handling vehicle, the travel system comprising a normal travel mode, a limp travel mode, and a restricted travel mode, wherein the travel system is communicatively coupled to the processing device; and
a wireless transceiver (134) on the materials handling vehicle that is communicatively coupled to the processing device;
wherein the processing device includes a controller comprising:
a memory device (206, 904) storing executable instructions; and
a processor (206, 902)communicably coupled to the memory device; and
wherein the processor, when executing the executable instructions read out from the memory device:
receives an electronic message that indicates that the materials handling vehicle is approaching an access-controlled travel path (130);
generates an electronic permission request to enter the access-controlled travel path responsive to the received electronic message;
issues an electronic command to set the travel system of the materials handling vehicle to the limp travel mode as the materials handling vehicle engages an entry threshold;
receives, via the wireless transceiver (134) of the materials handling vehicle, an electronic permission response, wherein the electronic permission response is received responsive to the generated electronic permission request, the electronic permission response indicating whether the access-controlled travel path is in an open state or a closed state; and
issues an electronic command to set the travel system of the materials handling vehicle to the restricted travel mode when the access-controlled travel path is in the closed state, and
issues an electronic command to set the travel system of the materials handling vehicle to the normal travel mode when the access-controlled travel path is in the open state.

14. The system of claim 13 further comprising:
a localized communication device (126) on the materials handling vehicle, wherein the localized communication device functions as a location sensor capable of interacting with an anchor (128) to designate location data identifying the proximity of an access-controlled travel path associated with the anchor, the localized communication device communicatively coupled to the processing device;
wherein:
the processor receives the electronic message from the localized communication device.

15. The system of claim 13 or claim 14, wherein the processor, when executing the executable instructions
issues an electronic command to set the travel system of the materials handling vehicle to the limp travel mode by controlling the travel system to restrict a forward travel distance of the materials handling vehicle to a predetermined distance beyond the entry threshold; and
limits thereafter, a travel direction of the materials handling vehicle to a reverse travel direction.

16. The system according to any combination of preceding claims 13-15, wherein the processor, when executing the executable instructions:
transmits an exit signal when the materials handling vehicle has occupied the access-controlled travel path and travels back over the entry threshold, thus exiting the access-controlled travel path.

17. The system according to any combination of preceding claims 13-16, wherein the processor, when executing the executable instructions:
receives an override command from an operator of the materials handling vehicle to alter the state of the access-controlled travel path; and
transmits the override command via the transceiver.

18. The system according to any combination of preceding claims 13-15, wherein the processor, when executing the executable instructions:
transmits via the transceiver, upon entry of the materials handling vehicle into the access-controlled travel path, an electronic command to toggle visual indicators (144) that are disposed proximally to the access-controlled travel path threshold to a closed configuration; and
transmits, upon exit of the materials handling vehicle from the access-controlled travel path, an electronic command to toggle visual indicators that are disposed proximally to the access-controlled travel path threshold to an open configuration.
